# EUROPÄISCHE PATENTSCHRIFT

(11) **EP 3 081 615 B1**
(45) Veröffentlichungstag und Bekanntmachung des Hinweises auf die Patenterteilung: **10.06.2020**
(21) Anmeldenummer: 16165251.6
(22) Anmeldetag: 14.04.2016
(51) Int. Cl.: C09K 3/18, C09K 3/10, C09K 3/12, C08L 95/00, C08K 3/22, B05B 1/00, B65D 25/40, C04B 20/10, E02D 31/00, E01C 23/09, C04B 26/26, E01C 11/10, C04B 111/00, C04B 111/72

(54) **FUGENABDICHTUNG FÜR EINE FUGE MIT MINDESTENS EINER SCHICHT EINER BITUMENHALTIGEN ERSTEN UND EINER BITUMENHALTIGEN ZWEITEN MASSE**
CLOSING JOINT FOR A GROOVE WITH LEAST ONE LAYER OF A BITUMINOUS FIRST AND SECOND MASS
ELEMENT D'ETANCHEIFICATION POUR UN JOINT COMPRENANT AU MOINS UNE COUCHE D'UNE PREMIERE MASSE COMPRENANT DU BITUME ET D'UNE SECONDE MASSE COMPRENANT DU BITUME

(30) Priorität: 14.04.2015 DE 102015105686
(43) Veröffentlichungstag der Anmeldung: 19.10.2016
(73) Patentinhaber: DENSO-Holding GmbH & Co., 51371 Leverkusen (DE)
(72) Erfinder:
(74) Vertreter: Geskes, Christoph

(56) Entgegenhaltungen:
- EP-A1- 1 350 774
- EP-B1- 0 646 675
- WO-A1-2011/120167
- WO-A1-2014/173513
- US-A- 5 249 876
- US-A1- 2008 168 926
- SARAH E. BRETZ ET AL: "Long-term performance of high-albedo roof coatings", ENERGY AND BUILDINGS, Bd. 25, Nr. 2, 1. Januar 1997 (1997-01-01) , Seiten 159-167, XP055295841, CH ISSN: 0378-7788, DOI: 10.1016/S0378-7788(96)01005-5
- KARLESSI T ET AL: "Development and testing of thermochromic coatings for buildings and urban structures", SOLAR ENERGY, PERGAMON PRESS. OXFORD, GB, Bd. 83, Nr. 4, 1. April 2009 (2009-04-01), Seiten 538-551, XP025980785, ISSN: 0038-092X, DOI: 10.1016/J.SOLENER.2008.10.005 [gefunden am 2008-10-29]
- LEVINSON R ET AL: "A novel technique for the production of cool colored concrete tile and asphalt shingle roofing products", SOLAR ENERGY MATERIALS AND SOLAR CELLS, ELSEVIER SCIENCE PUBLISHERS, AMSTERDAM, NL, Bd. 94, Nr. 6, 1. Juni 2010 (2010-06-01), Seiten 946-954, XP027013181, ISSN: 0927-0248 [gefunden am 2010-04-16]
- SYNNEFA A ET AL: "Experimental testing of cool colored thin layer asphalt and estimation of its potential to improve the urban microclimate", BUILDING AND ENVIRONMENT, PERGAMON PRESS, OXFORD, GB, Bd. 46, Nr. 1, 1. Januar 2011 (2011-01-01) , Seiten 38-44, XP027260792, ISSN: 0360-1323 [gefunden am 2010-07-03]
- M. SANTAMOURIS ET AL: "Using advanced cool materials in the urban built environment to mitigate heat islands and improve thermal comfort conditions", SOLAR ENERGY., Bd. 85, Nr. 12, 1. Dezember 2011 (2011-12-01), Seiten 3085-3102, XP055295630, GB ISSN: 0038-092X, DOI: 10.1016/j.solener.2010.12.023
- BOONNAK SUKHUMMEK ET AL: "The Effect of Titanium Dioxide and Additives on Heat Reflection and Thermal Reduction of Paint", KEY ENGINEERING MATERIALS, Bd. 545, 25. März 2013 (2013-03-25), Seiten 95-100, XP055294628, DOI: 10.4028/www.scientific.net/KEM.545.95
- Ralf Alte-Teigeler: "Die neue ZTV Fug - StB 15", , 5 May 2017 (2017-05-05), pages 1-101, XP055525580, Retrieved from the Internet: URL:https://www.guetegemeinschaft-beton.de /fileadmin/guetegemeinschaft-beton-de/medi a/Redaktion/PDF-Dateien/2-Alte-Teigeler_ZT V_Fug-StB.pdf [retrieved on 2018-11-21]
- Hongying Yang ET AL: "Studying the mechanisms of titanium dioxide as ultraviolet‐blocking additive for films and fabrics by an improved scheme", Journal of Applied Polymer Science, 5 June 2004 (2004-06-05), pages 3201-3210, XP055314367, Hoboken DOI: 10.1002/app.20327 Retrieved from the Internet: URL:|https://doi.org/10.1002/app.20327
- SIBUM H ET AL: "TITANIUM", 1 January 1997 (1997-01-01), HANDBOOK OF EXTRACTIVE METALLURGY. METAL INDUSTRY, FERROUS METALS, WEINHEIM, VCH, DE, PAGE(S) 1129 - 1180, XP001237218, ISBN: 978-3-527-28792-5 * paragraphs [22.7.1], [22.7.7], [22.7.12] *

## Beschreibung

Die vorliegende Erfindung betrifft eine Fugenabdichtung für eine Fuge mit mindestens einer Schicht mindestens einer ersten bitumenhaltigen Masse und einer zweiten bitumenhaltigen und titandioxidhaltigen Masse als auch eine Fuge mit einer erfindungsgemäßen Fugenabdichtung.

Bitumenhaltige Massen als Fugenmaterial oder zur Verfüllung von Rissen werden insbesondere im Straßenbau und verwandten Bereichen eingesetzt, beispielsweise auch bei der Erstellung, Reparatur oder Sanierung von Verkehrswegen. Bitumen ist ein relativ günstiges Produkt der Erdöldestillation, das aufgrund seiner elastisch-plastischen Eigenschaften nicht nur als Bindemittel in Asphalt, sondern insbesondere auch in einer elastomer-modifizierten, d. h. polymer-modifizierten Form als Fugenmaterial oder Rissfüllmaterial eingesetzt wird.

Fugenmassen auf Bitumenbasis werden insbesondere als Heißvergussmassen, aber auch als Kaltvergussmassen, oder in Form von Bitumenfugenbändern zum Ausfüllen von horizontal angeordneten Fugen und/oder Rissen eingesetzt. Diese sind insbesondere in den "Zusätzlichen technischen Vertragsbedingungen und Richtlinien für Fugen in Verkehrsflächen, Ausgabe 2001 (ZTV Fug-StB 01)" angesprochen.

WO 2014/173513 A1 offenbart eine Masse zum Befüllen von Fugen und/ oder Rissen umfassend mindestens ein Bitumen in einer Menge in einem Bereich von etwa 30 Gew.-% bis etwa 75 Gew.-%; mindestens ein Elastomer, ausgewählt aus einer Gruppe umfassend Styrol-Butadien-Copolymere, Styrol-ButadienStyrol-(Block-)Copolymere, Styrol-Isopren-(Block-) Copolymere und/oder Styrol-Isopren-Styrol-(Block-) Copolymere, synthetische und/oder natürliche Kautschuke, in einer Menge in einem Bereich von etwa 2,5 Gew.-% bis etwa 22 Gew.-%; mindestens einen pulverförmigen mineralischen Füllstoff in einer Menge in einem Bereich von etwa 12 Gew.-% bis etwa 35 Gew.-%; mindestens ein faserförmiges Stellmittel zur Einstellung der Festigkeit, ausgewählt aus einer Gruppe umfassend Zellulose, Glasfasern und/oder Kunststofffasern, in einer Menge in einem Bereich von etwa 0,5 Gew.-% bis etwa 5 Gew.-%; und mindestens ein Polymer, hergestellt aus einem Olefin und einer a, βungesättigten Carbonsäure und/oder a, β-ungesättigtem Carbonsäureanhydrid, in einer Menge in einem Bereich von etwa 0,1 Gew.-% bis etwa 8 Gew.-%, bevorzugt bis etwa 5 Gew.-%, wobei die Gewichtsprozente jeweils bezogen sind auf die Gesamtmenge der Masse.

Typischerweise werden horizontale Fugen oder Risse mit Bitumenheißvergussmassen oder Bitumenfugenbändern verfüllt beziehungsweise geschlossen. Vertikale Fugen werden demgegenüber insbesondere mit Massen beziehungsweise Bändern verfüllt, die ihre Grundlage auf Polysulfiden und/oder Polyurethanen haben. Dies hat seinen Grund darin, dass Bitumenmassen, insbesondere Heißvergussmassen, zu niedrigviskos sind, als dass sie in vertikalen Fugen und/oder Rissen eingesetzt werden können, da diese schlicht aus diesen ablaufen. Bitumenfugenbänder hingegen sind in vertikalen Fugen und/oder Rissen nur schwer einsetzbar aufgrund der oftmals spezifischen Geometrie derselben, oder aber weil diese ebenfalls beim Einsetzen, selbst unter Verwendung von Primern beziehungsweise Haftvermittlern, nicht ohne Weiteres nach Einlegung in eine vertikale Fuge in selbiger verbleiben, sondern aus dieser selbständig aufgrund des eigenen Gewichtes sich herauslösen.

Insbesondere vertikale Fugen finden sich im Bereich von Betonschutzwänden an Verkehrswegen. Betonschutzwände werden in aller Regel aus Formsteinen hergestellt und beispielweise zum Lärmschutz, oder aber auch für Unterteilungen von Fahrbahnen, beispielsweise auf Autobahnen oder Bundesstraßen, eingesetzt. Bei der Erstellung derartiger Schutzwände aus Beton werden zunächst Betonschutzwände kontinuierlich hergestellt und anschließend Fugen eingebracht, um einen Bewegungsausgleich zu schaffen und damit mögliche Spannungen abzubauen. In einer alternativen Bauweise werden die entsprechenden Formsteine nebeneinander aufgestellt, wobei sich zwischen gegenüberliegenden Stirnflächen eine Fuge bildet. Die genannten Fugen gilt es zu verschließen. Fugenabdichtungen für vertikale Fugen in insbesondere Betonschutzwänden erfolgen beispielsweise durch Einlage geeigneter Fugenbänder, gegebenenfalls auch mit Profil, wobei jedoch die vorstehend geschilderten Probleme auftreten. Auch können beispielsweise Massen aus Polysulfiden oder Polyurethanen verwendet werden, um die Fugen zu schließen, welche jedoch im Vergleich zu bituminösen Materialien relativ kostenintensiv sind.

Es ist daher Aufgabe der vorliegenden Erfindung, eine Fugenabdichtung zur Verfügung zu stellen, welche die vorstehend geschilderten aus dem Stand der Technik bekannten Probleme löst, insbesondere bei vertikalen Fugen in Betonschutzwänden eine möglichst hohe Lebensdauer zu erzielen, da ein langanhaltender Schutz vor Korrosionen gleich welcher Art geboten und sonstige Arten von Undichtigkeiten in Betonschutzwänden unterbunden werden sollten.

Diese Aufgabe wird erfindungsgemäß gelöst durch eine Fugenabdichtung für eine Fuge, insbesondere in Betonteilen, insbesondere in Betonschutzwänden, mit mindestens einer Schicht einer bitumenhaltigen ersten Masse und mindestens einer Schicht einer bitumenhaltigen zweiten, titandioxidhaltigen Masse, umfassend
- mindestens ein Bitumen in einer Menge in einem Bereich von etwa 25 Gew.-% bis etwa 60 Gew.-%;
- mindestens ein Elastomer, ausgewählt aus einer Gruppe umfassend Styrol-Butadien-Copolymere, Styrol-Butadien-Styrol-(Block-)Copolymere, Styrol-Isopren-(Block-)Copolymere und/oder Styrol-Isopren-Styrol-(Block-) Copolymere, synthetische und/oder natürliche Kautschuke, in einer Menge in einem Bereich von etwa 2 Gew.-% bis etwa 10 Gew.-%;
- mindestens einen pulverförmigen mineralischen Füllstoff in einer Menge in einem Bereich von etwa 7 Gew.-% bis etwa 25 Gew.-%;
- mindestens ein faserförmiges Stellmittel zur Einstellung der Festigkeit, ausgewählt aus einer Gruppe umfassend Zellulose, Glasfasern und/oder Kunststofffasern, in einer Menge in einem Bereich von etwa 0,3 Gew.-% bis etwa 5 Gew.-%;
- mindestens ein Polymer, hergestellt aus einem Olefin und einer a, β-ungesättigten Carbonsäure und/oder einem a, β-ungesättigtem Carbonsäureanhydrid, in einer Menge in einem Bereich von etwa 0,1 Gew.-% bis etwa 6 Gew.-%; und
- mindestens ein Titandioxid in einer Menge in einem Bereich von etwa 10 Gew.-% bis etwa 40 Gew.-%, wobei die Gewichtsprozente jeweils bezogen sind auf die Gesamtmenge der zweiten, titandioxidhaltigen Masse,
wobei die mindestens eine Schicht der zweiten Masse auf der mindestens einen Schicht der ersten Masse angeordnet ist und eine freiliegende Oberfläche bildet, wobei ein Verhältnis einer Schichtstärke der ersten Masse und der zweiten Masse in einem Bereich von etwa 250:1 bis etwa 1:1 beträgt und wobei die zweite Masse im Unterschied zur erste Masse Titandioxid umfasst.

Bevorzugt liegt das Verhältnis der Schichtstärke der ersten Masse und der zweiten Masse in einem Bereich von etwa 50:1 bis etwa 2:1, weiter bevorzugt in einem Bereich von etwa 30:1 bis etwa 2,5:1.

Bevorzugt wird im Sinne der vorliegenden Erfindung mindestens ein Titandioxid in der titandioxidhaltigen und bitumenhaltigen zweiten Masse eingesetzt, welches eine Anatas-Struktur aufweist. Aber auch mindestens ein Titandioxid mit einer Rutil-Struktur oder Mischungen von Titandioxiden unterschiedlicher Struktur derselben sind einsetzbar. Besonders bevorzugt weist das Titandioxid der zweiten Masse eine Schüttdichte in einem Bereich von etwa 450 kg/m³ bis etwa 750 kg/m³, weiter bevorzugt eine Schüttdichte in einem Bereich von etwa 520 kg/m³ bis etwa 660 kg/m³ auf. Besonders bevorzugt liegt das Titandioxid in der zweiten Masse in Pulverform vor. Vorzugsweise liegt das relative Streuvermögen gemäß DIN 53165 des eingesetzten Titandioxids in einem Bereich von etwa 58 bis etwa 75, bevorzugt in einem Bereich von etwa 60 bis etwa 68. Besonders bevorzugt ist das in der zweiten Masse eingesetzte Titandioxid nicht durch weitere Elemente wie beispielsweise Aluminium, Silicium oder Mangan stabilisiert. Bevorzugt umfasst die titandioxidhaltige und bitumenhaltige zweite Masse etwa 15 Gew.-% bis etwa 35 Gew.-%, weiter bevorzugt etwa 20 Gew.-% bis etwa 30 Gew.-%, jeweils bezogen auf die Gesamtmenge der zweiten Masse mindestens eines Titandioxides.

Die bitumenhaltige erste Masse ist insbesondere eine solche, welche in der WO 2014/173513 A1 beschrieben ist. Insoweit wird die Offenbarung derselben vollständig zum Gegenstand der vorliegenden Erfindung gemacht. Demnach umfasst die bitumenhaltige erste Masse
- mindestens ein Bitumen in einer Menge in einem Bereich von etwa 30 Gew.-% bis etwa 75 Gew.-%;
- mindestens ein Elastomer, ausgewählt aus einer Gruppe umfassend Styrol-Butadien-Copolymere, Styrol-Butadien-Stryrol-(Block-)Copolymere, Styrol-Isopren-Styrol-(Block-)Copolymere, Styrol-Isopren-(Block-)Copolymere, synthetische und/oder natürliche Kautschuke, in einer Menge in einem Bereich von etwa 2,5 Gew.-% bis etwa 22 Gew.-%;
- mindestens einen pulverförmigen mineralischen Füllstoff in einer Menge in einem Bereich von etwa 12 Gew.-% bis etwa 35 Gew.-%;
- mindestens ein faserförmiges Stellmittel zur Einstellung der Festigkeit, ausgewählt aus einer Gruppe umfassend Cellulose, Glasfasern und/oder Kunststofffasern, in einer Menge in einem Bereich von etwa 0,5 Gew.-% bis etwa 5 Gew.-%; und
- mindestens ein Polymer, hergestellt aus einem Olefin und einer a, β-ungesättigten Carbonsäure und/oder einem a, β-ungesättigtem Carbonsäureanhydrid, in einer Menge in einem Bereich von etwa 0,1 Gew.-% bis etwa 8 Gew.-%, bevorzugt bis etwa 5 Gew.-%,
wobei die Gewichtsprozente jeweils bezogen sind auf die Gesamtmenge der ersten Masse.

Die titandioxidhaltige und bitumenhaltige zweite Masse der erfindungsgemäßen Fugenabdichtung umfasst
- mindestens ein Bitumen in einer Menge in einem Bereich von etwa 25 Gew.-% bis etwa 60 Gew.-%;
- mindestens ein Elastomer, ausgewählt aus einer Gruppe umfassend Styrol-Butadien-Copolymere, Styrol-Butadien-Styrol-(Block-)Copolymere, Styrol-Isopren-(Block-)Copolymere und/oder Styrol-Isopren-Styrol-(Block-) Copolymere, synthetische und/oder natürliche Kautschuke, in einer Menge in einem Bereich von etwa 2 Gew.-% bis etwa 10 Gew.-%;
- mindestens einen pulverförmigen mineralischen Füllstoff in einer Menge in einem Bereich von etwa 7 Gew.-% bis etwa 25 Gew.-%;
- mindestens ein faserförmiges Stellmittel zur Einstellung der Festigkeit, ausgewählt aus einer Gruppe umfassend Zellulose, Glasfasern und/oder Kunststofffasern, in einer Menge in einem Bereich von etwa 0,3 Gew.-% bis etwa 5 Gew.-%;
- mindestens ein Polymer, hergestellt aus einem Olefin und einer a, β-ungesättigten Carbonsäure und/oder einem a, β-ungesättigtem Carbonsäureanhydrid, in einer Menge in einem Bereich von etwa 0,1 Gew.-% bis etwa 6 Gew.-%; und
- mindestens ein Titandioxid in einer Menge in einem Bereich von etwa 10 Gew.-% bis etwa 40 Gew.-%,
wobei die Gewichtsprozente jeweils bezogen sind auf die Gesamtmenge der zweiten, titandioxidhaltigen Masse.

Soweit in der vorliegenden Anmeldung der Begriff "etwa" in Hinblick auf Werte, Wertebereiche, insbesondere Gewichtsprozentbereiche, Verhältnisse oder Bereiche der Faserlängen oder Faserdicken, verwendet wird, ist hierunter zu verstehen, dass geringfügige Abweichungen von den angegebenen Bereichen aus dem Schutzbereich, der durch die Angaben in den Patentansprüchen vermittelt wird, nicht hinausführen. Insbesondere sind Abweichungen von +/- 10 Prozent, bevorzugt +/- 5 Prozent, bezogen auf die jeweilige Angabe, von dem Begriff "etwa" abgedeckt. Soweit in der vorliegenden Erfindung Bezug genommen wird auf Normen, sind die in der zum Zeitpunkt der Einreichung der vorliegenden Anmeldung gültigen Fassungen oder letzten Fassungen, so die Normen aufgehoben wurden, gemeint.

Soweit in der vorliegenden Anmeldung der Begriff "Bitumen" verwendet wird, ist hierunter insbesondere ein Bitumen mit einer Nadelpenetration bei 25 °C in Übereinstimmung mit der DIN EN 1426 (Maßeinheit 0,1 mm) in einem Bereich von etwa 80 bis etwa 300, bevorzugt in einem Bereich von etwa 140 bis etwa 250, noch weiter bevorzugt in einem Bereich von etwa 160 bis etwa 220, zu verstehen. Besonders bevorzugt wird dabei Bitumen eingesetzt, welches für den Straßenbau geeignet ist, in Anlehnung an die DIN 1995-1. Bevorzugt umfasst die bitumenhaltige erste Masse das mindestens eine Bitumen in einer Menge in einem Bereich von etwa 40 Gew.-% bis etwa 65 Gew.-%, weiter bevorzugt in einer Menge von etwa 45 Gew.-% bis etwa 58 Gew.-%, noch weiter bevorzugt in einer Menge in einem Bereich von etwa 42 Gew.-% bis etwa 56 Gew.-%. Bevorzugt umfasst die titandioxidhaltige und bitumenhaltige zweite Masse Bitumen in einer Menge in einem Bereich von etwa 30 Gew.-% bis etwa 55 Gew.-%, weiter bevorzugt in einem Bereich von etwa 33 Gew.-% bis etwa 48 Gew.-%.

Im Sinne der vorliegenden Erfindung wird unter dem Begriff "Elastomer" ein Polymer mit gummielastischem Verhalten, das bei Raumtemperatur wiederholt mindestens auf das zweifache seiner Länge gedehnt werden kann und nach Aufhebung des für die Dehnung erforderlichen Zwanges sofort wieder annähernd die Ausgangslänge einnimmt, verstanden. Besonders bevorzugt im Sinne der vorliegenden Erfindung wird das mindestens eine Elastomer ausgewält aus einer Gruppe umfassend Styrol-Butadien-Copolymere, Styrol-Butadien-Styrol-(Block-)Copolymere, Styrol-Isopren-(Block-)Copolymere, Styrol-Isopren-Styrol-(Block-)Copolymere, Butadien-Kautschuke, Butyl-Kautschuke, halogenierte Butyl-Kautschuke und/oder natürliche Kautschuke. Das mindestens eine Elastomer kann dabei vorzugsweise in Form eines Mehls, weiter bevorzugt in Form eines Gummimehls, der Mischung zugegeben werden. Vorzugsweise liegt bei Zugabe des mindestens einen Elastomeren in Form eines Mehles die Körnung in einem Bereich von > 0 mm bis etwa 0,5 mm. Bei Einsatz des mindestens einen Elastomeren in Form eines Mehles kann dieses vorteilhafterweise auch eine Mischung unterschiedlicher Elastormere darstellen, und beispielsweise aus einer Mischung umfassend natürliche Kautschuke, Styrol-Butadien-Kautschuke, Styrol-Isopren-StyrolCopolymere, Styrol-Isopren-Copolymere, Butadien-Kautschuke und/oder Butyl-Kautschuke beziehungsweise halogenierte Kautschuke bestehen. Besonders bevorzugt wird als Elastomer eingesetzt ein Styrol-Isopren-Styrol-Copolymer, insbesondere wenn dieses als Blockcopolymer ausgebildet ist, bevorzugt in Form eines Styrol-Isopren-Styrol/Styrol-Isopren-Blockcopolymers. Weiter vorteilhafterweise wird als Elastomer eingesetzt eine Mischung aus einem Styrol-Butadien-Styrol-Copolymeren, gegebenenfalls auch Blockcopolymeren, und/oder einem Styrol-Isopren-Styrol-Copolymeren oder aber Blockcopolymeren in Mischung mit einem Mehl, welches ein Rezyclat darstellt, vorzugsweise aus Automobilreifen, und dabei eine Mischung eines natürlichen Kautschukes, eines Styrol-Butadien-Kautschukes, eines Butadien-Kautschukes, eines Butyl-Kautschukes und/oder eines halogenierten Butyl-Kautschukes darstellt.

Besonders bevorzugt wird das mindestens eine Elastomer in einer Menge von etwa 2 Gew.-%, bevorzugt etwa 5 Gew.-%, bis etwa 20 Gew.-%, weiter bevorzugt in einer Menge von etwa 8 Gew.-% bis etwa 16 Gew.-%, noch weiter bevorzugt in einer Menge von etwa 11 Gew.-% bis etwa 15 Gew.-%, in der bitumenhaltigen ersten Masse eingesetzt, wobei die Gewichtsprozente jeweils bezogen sind auf die Gesamtmenge der ersten Masse. Besonders bevorzugt wird das mindestens eine Elastomer in der titandioxidhaltigen und bitumenhaltigen zweiten Masse in einer Menge in einem Bereich von etwa 3 Gew.-% bis etwa 9 Gew.-%, weiter bevorzugt in einer Menge in einem Bereich von etwa 4 Gew.-% bis etwa 7,5 Gew.-% eingesetzt, wobei die Gewichtsprozente jeweils bezogen sind auf die Gesamtmenge der zweiten Masse. Besonders bevorzugt weist die zweite Masse das mindestens eine Elastomer, insbesondere ausgebildet als Styrol-Isopren-Styrol-(Block-)Copolymer und/oder Styrol-Butadien-Styrol-(Block-)Copolymer, beide insbesondere in Form von Blockcopolymeren, in einer Menge in einem Bereich von etwa 2,5 Gew.-% bis etwa 10 Gew.-%, weiter bevorzugt in einer Menge von etwa 5 Gew.-% bis etwa 9 Gew.-%, als auch ein weiteres Elastomer auf der Basis eines Mehls, gewonnen als Rezyclat, bevorzugt aus Automobilreifen, umfassend eine Mischung verschiedener Elastomere wie vorstehend erwähnt, in einer Menge von etwa 3 Gew.-% bis etwa 12 Gew.-%, weiter bevorzugt eine Menge von etwa 5 Gew.-% bis etwa 8 Gew.-%, auf.

Der mindestens eine pulverförmige mineralische Füllstoff im Sinne der vorliegenden Erfindung ist vorzugsweise ausgewählt aus einer Gruppe umfassend Silikate, Phosphate und/oder Sulfate. Weiter bevorzugt ist der pulverförmige mineralische Füllstoff karbonatfrei. Besonders bevorzugt im Sinne der vorliegenden Erfindung ist der mindestens eine pulverförmige mineralische Füllstoff ausgewählt aus einer Gruppe umfassend Magnesiumsilikate, insbesondere ein Talkum. Der mindestens eine pulverförmige mineralische Füllstoff kann dabei auch in einer Mischung mit beispielsweise einem Chlorit eingesetzt werden. Besonders bevorzugt ist der mindestens eine pulverförmige mineralische Füllstoff in einer Menge in einem Bereich von etwa 14 Gew.-% bis etwa 30 Gew.-%, weiter bevorzugt in einer Menge in einem Bereich von etwa 15 Gew.-% bis etwa 23 Gew.-%, jeweils bezogen auf die Gesamtmenge der ersten Masse, eingesetzt. Bevorzugt ist der mindestens eine pulverförmige mineralische Füllstoff in der titandioxidhaltigen und bitumenhaltigen zweiten Masse in einer Menge in einem Bereich von etwa 9 Gew.-% bis etwa 22 Gew.-%, weiter bevorzugt in einer Menge in einem Bereich von etwa 10 Gew.-% bis etwa 18 Gew.-%, jeweils bezogen auf die Gesamtmenge der zweiten Masse, eingesetzt.

Weiter bevorzugt umfassen die erste und die zweite Masse mindestens ein faserförmiges Stellmittel, welches zur Einstellung der Festigkeit, insbesondere der Standfestigkeit, dient. Mittels dieses faserförmigen Stellmittels kann insbesondere auch die Verarbeitungskonsistenz der ersten und zweiten Masse eingestellt werden. Dabei ist das mindestens eine faserförmige Stellmittel vorteilhafterweise in einer Menge in einem Bereich von etwa 1 Gew.-% bis etwa 4,5 Gew.-%, weiter bevorzugt in einer Menge in einem Bereich von etwa 1,6 Gew.-% bis etwa 3 Gew.-%, jeweils bezogen auf die Gesamtmenge der ersten Masse, in dieser enthalten. Das mindestens eine faserförmige Stellmittel ist in der titandioxidhaltigen und bitumenhaltigen zweiten Masse vorteilhafterweise in einer Menge in einem Bereich von etwa 0,75 Gew.-% bis etwa 2,5 Gew.%, weiter bevorzugt in einer Menge in einem Bereich von etwa 1 Gew.-% bis etwa 2 Gew.-%, jeweils bezogen auf die Gesamtmenge der zweiten Masse, eingesetzt. Vorteilhafterweise ist das mindestens eine faserförmige Stellmittel ausgewählt aus einer Gruppe umfassend Cellulose, Glasfasern und/oder Kunststofffasern, und ist besonders bevorzugt aus einer Gruppe umfassend Cellulose-Fasern. Das mindestens eine Stellmittel weist dabei vorzugsweise eine durchschnittliche Faserlänge in einem Bereich von etwa 500 µm bis etwa 1500 µm auf, weiter bevorzugt eine Faserlänge in einem Bereich von etwa 800 µm bis etwa 1500 µm. Weiter bevorzugt weist das mindestens eine faserförmige Stellmittel eine durchschnittliche Faserdicke in einem Bereich von etwa 20 µm bis etwa 80 µm auf, weiter bevorzugt eine solche in einem Bereich von etwa 30 µm bis etwa 60 µm.

Im Sinne der vorliegenden Erfindung umfasst die erste und zweite Masse weiterhin mindestens ein Polymer, welches sich von dem weiter vorstehend beschriebenen mindestens einem Elastomeren unterscheidet, und hergestellt ist aus einem Olefin und insbesondere einer a, β-ungesättigten Carbonsäure und/oder insbesondere a, β-ungesättigtem Carbonsäureanhydrid. Dieses ist vorteilhafterweise in einer Menge in einem Bereich von etwa 0,5 Gew.-% bis etwa 2,8 Gew.-%, weiter bevorzugt etwa 0,8 Gew.-% bis etwa 2 Gew.-%, noch weiter bevorzugt in einer Menge in einem Bereich von etwa 0,9 Gew.-% bis etwa 1,4 Gew.-%, in der ersten Masse enthalten, wobei die Gewichtsprozente jeweils bezogen sind auf die Gesamtmenge der ersten Masse. In der titandioxidhaltigen und bitumenhaltigen zweiten Masse ist das mindestens eine Polymer in einer Menge in einem Bereich von etwa 0,25 Gew.-% bis etwa 3 Gew.-%, weiter bevorzugt in einer Menge von etwa 0,45 Gew.-% bis etwa 1,2 Gew.-%, noch weiter bevorzugt in einer Menge in einem Bereich von etwa 0,5 Gew.-% bis etwa 1 Gew.-%, wobei die Gewichtsprozente jeweils bezogen sind auf die Gesamtmenge der zweiten Masse, enthalten. Besonders bevorzugt ist das Polymer hergestellt aus einem Olefin, ausgewählt aus einer Gruppe umfassend Ethylen und/oder Propylen oder Vinylalkohol, und Maleinsäureanhydrid. Statt Maleinsäureanhydrid wäre auch zum Beispiel Acrylsäure möglich einzusetzen. Auch können lonomere der genannten Polymere eingesetzt werden. Besonders bevorzugt werden als Polymere des Maleinsäureanhydrides Copolymere oder gepfropfte Polymere des Maleinsäureanhydrides mit Propylen und/oder Ethylen eingesetzt. Möglich ist der Einsatz von statistischen Copolymeren mit einem Anteil an Maleinsäureanhydrid von < 50 Mol-% als auch alternierende Copolymere mit einem Maleinsäureanhydrid-Anteil von 50 Mol-%. Dabei können eine Vielzahl von Monomeren unterschiedlicher Struktur eingesetzt werden. Bevorzugt wird das mindestens eine Polymer eingesetzt in Form von Pastillen, mit einem mittleren Durchmesser in einem Bereich von etwa 7 mm bis etwa 10 mm. Die Dichte des eingesetzten Polymeren, bevorzugt die Dichte des eingesetzten Maleinsäureanhydridcopolymeren, liegt in einem Bereich von etwa 0,90 g/cm³ bis etwa 0,935 g/cm³, gemessen gemäß ISO 1183. Besonders bevorzugt im Sinne der vorliegenden Erfindung wird als Polymer ein Ethylen-Maleinsäureanhydrid-Copolymer in den vorstehend genannten Gewichtsprozentbereichen, vorzugsweise als statistisches, aber auch als alternierendes Copolymer, eingesetzt, besonders bevorzugt ein gepfropftes. Das eingesetzte Polymer aus Ethylen und/oder Propylen und Maleinsäureanhydrid oder Acrylsäure weist vorzugsweise eine Viskosität nach Brookfield bei einer Temperatur von 140°C in einem Bereich von etwa 400 bis etwa 3000 mPa*s, weiter bevorzugt in einem Bereich von etwa 500 mPa*s bis etwa 2000 mPa*s, auf. Bevorzugt weist das aus Ethylen und/oder Propylen und Maleinsäureanhydrid oder Acrylsäure hergestellte Polymer einen Tropfpunkt gemäß ASTM D3954 in einem Bereich von etwa 85°C bis etwa 125°C, weiter bevorzugt in einem Bereich von etwa 90°C bis etwa 115°C auf, gemessen beispielsweise mit einem Tropfpunktanalysesystem DP70 der Mettler-Toledo AG, Schwerzenbach, Schweiz. Das mindestens eine Polymere dient vorteilhafterweise als Kompatibilisator, um insbesondere die Einbindung des mindestens einen faserförmigen Stellmittels, aber auch des pulverförmigen mineralischen Füllstoffes in der zweiten Masse zu ermöglichen. Darüber hinaus wird durch das mindestens eine Polymer auch der Erweichungspunkt der ersten und zweiten Masse erhöht, beziehungsweise die Schmelzviskosität desselben verringert. Bezüglich der beiden zuletzt genannten Eigenschaften ähnelt damit das eingesetzte Polymer einem vorteilhafterweise in der ersten und zweiten Masse eingesetzten Wachs, wozu weiter unten Ausführungen getroffen werden.

Weiter bevorzugt kann die erste Masse mindestens ein Wachs umfassen in einer Menge in einem Bereich von etwa 0,5 Gew.-% bis etwa 3 Gew.-%, weiter bevorzugt in einer Menge in einem Bereich von etwa 1 Gew.-% bis etwa 2 Gew.-%, jeweils bezogen auf die Gesamtmenge der ersten Masse. Die zweite Masse umfasst bevorzugt mindestens ein Wachs in einer Menge in einem Bereich von etwa 0,5 Gew.-% bis etwa 2,5 Gew.-%, weiter bevorzugt in einer Menge in einem Bereich von etwa 0,8 Gew.-% bis etwa 1,5 Gew.-%, jeweils bezogen auf die Gesamtmenge der zweiten Masse.

Besonders bevorzugt wird das Wachs ausgewählt aus einer Gruppe umfassend Fischer-Tropsch-Wachse und/oder Montanwachse. Das mindestens eine Wachs wird vorteilhafterweise eingesetzt zur Erhöhung des Erweichungspunktes der ersten, ggf. der zweiten Masse beziehungsweise der Verringerung der Schmelzviskosität derselben.

Die erste Masse umfasst weiterhin vorteilhafterweise mindestens einen Weichmacher, ausgewählt aus der Gruppe der aliphatischen und/oder naphthenischen Öle, in einer Menge in einem Bereich von etwa 5 Gew.-% bis etwa 20 Gew.-%, weiter bevorzugt in einer Menge in einem Bereich von etwa 8 Gew.-% bis etwa 15 Gew.-%, jeweils bezogen auf die Gesamtmenge der ersten Masse. Die titandioxidhaltige und bitumenhaltige zweite Masse umfasst vorteilhafterweise mindestens einen Weichmacher, ausgewählt aus einer Gruppe der aliphatischen und/oder naphthenischen Öle, insbesondere einen solchen identisch zu demjenigen, der von der ersten Masse umfasst sein kann, in einer Menge in einem Bereich von etwa 3,5 Gew.-% bis etwa 15 Gew.-%, weiter bevorzugt in einem Bereich von etwa 5 Gew.-% bis etwa 12 Gew.-%, jeweils bezogen auf die Gesamtmenge der zweiten Masse. Besonders bevorzugt umfasst die erste und/oder zweite Masse mindestens ein naphthenisches Prozessöl als Weichmacher. Der mindestens eine Weichmacher weist vorteilhafterweise eine Dichte bei 25°C gemäß ISO 12185 in einem Bereich von etwa 0,89 kg/dm³ bis etwa 0,915 kg/dm³ auf. Er weist vorteilhafterweise eine Viskosität bei 40 °C gemäß ISO 3104 in einem Bereich von etwa 50 mm²/s (cSt), bevorzugt etwa 130 mm²/s(cSt), bis etwa 170 mm²/s (cSt), bevorzugt bis etwa 155 mm²/s (cSt), auf.

Die erste und/oder zweite Masse weist vorteilhafterweise einen Erweichungspunkt gemäß DIN EN 1427 von größer gleich etwa 85 °C, weiter bevorzugt größer gleich etwa 90 °C, auf. Weiter bevorzugt weist die erste und/oder zweite Masse eine Konus-Penetration gemäß DIN EN 13880-2 bei 25 °C in einem Bereich von etwa 40 bis etwa 130 1/10 mm, weiter bevorzugt in einem Bereich von etwa 50 bis etwa 110 1/10 mm, auf. Weiter bevorzugt weist die erste und/oder zweite Masse ein elastisches Rückstellvermögen gemäß DIN EN 12880-3 von kleiner gleich etwa 60 %, weiter bevorzugt kleiner gleich etwa 50 %, auf.

Die erste und/oder zweite Masse weisen den großen Vorteil auf, dass diese aufgrund ihrer hohen Standfestigkeit auch bei Temperaturen von etwa 70 °C oder mehr eingesetzt werden können, und zwar insbesondere im Bereich vertikaler Fugen und Risse. Durch ihre spezifischen Eigenschaften können die ersten und/oder zweiten Massen in horizontalen als auch in vertikalen Flächen und dabei auch bei Anschlüssen von horizontalen Fugen beziehungsweise Rissen an vertikale Fugen beziehungsweise Risse eingesetzt werden, so dass Unverträglichkeitsprobleme sich nicht stellen. Die erste und die zweite Masse können auch vorteilhafterweise insbesondere bei Betonbauteilen, insbesondere Betonschutzwänden, oder Fahrbahndecken, die aggressiven Medien ausgesetzt sind, sowohl für horizontale als auch vertikale Verwendungen eingesetzt werden. Die erste und zweite Masse können in überfahrenen Fugen in Asphalt- und Betonflächen eingesetzt werden, das heißt Fugen, aber auch Risse, die durch Nutzfahrzeuge wie Traktoren, Lkws oder Pkws überfahren werden. Die erste und zweite Masse sind beständig gegenüber aggressiven Medien auch über lange Zeiträume. Sie sind einkomponentig und damit einfach zu verarbeiten. Sie werden bevorzugt erwärmt beziehungsweise heiß verarbeitet bei Temperaturen in einem Bereich von etwa 90°C bis etwa 200°C, bevorzugt in einem Bereich von etwa 100°C bis etwa 160°C. Die erste und die zweite Masse sind sehr gut verträglich miteinander. Bevorzugt sind die erste und die zweite Masse bis auf das Titandioxid aus identischen Bestandteilen zusammengesetzt. Weiter bevorzugt ist zumindest das mindestens eine eingesetzte Bitumen und das mindestens eine eingesetzte Polymer, weiter bevorzugt zusätzlich auch das mindestens eine eingesetzte Elastomer, in der ersten und der zweiten Masse identisch. Identisch bedeutet dabei, dass die Bestandteile eine chemisch identische Struktur, weiter bevorzugt auch physikalischidentische Eigenschaften, aufweisen. In der erfindungsgemäßen Fugenabdichtung verwachsen die erste und die zweite Masse bevorzugt miteinander. Eine Ablösung einer Schicht der zweiten Masse von einer unter dieser angeordneten Schicht der ersten Masse ist vorteilhafterweise verhindert. Bereits bei Raumtemperatur, erst recht bei erhöhten Temperaturen ab etwa 40°C, bevorzugt ab etwa 50°C, findet eine Verwachsung statt. Die erfindungsgemäße Fugenabdichtung schützt vorteilhafterweise eine innere Bewehrung von Betonteilen, insbesondere Betonschutzwänden, insbesondere vor Korrosion.

Bevorzugt deckt die mindestens eine Schicht der zweiten Masse die mindestens eine Schicht der ersten Masse vollständig ab. Die Schicht der zweiten Masse weist bevorzugt eine größere Breite auf als die Schicht der ersten Masse, deren Breite durch eine Breite der Fuge vorgegeben ist. Die Bedeckung durch die zweite Masse kann insbesondere derart erfolgen, dass die mindestens eine Schicht der zweiten Masse oberhalb der Fuge, d. h, oberhalb eines oberen Fugenrandes derselben, angeordnet ist, und damit eine an dem oberen Fugenrand angrenzende Oberfläche, z. B. eines Betonteils, insbesondere einer Betonschutzwand, überdeckt, z. B. etwa 1 mm bis etwa 5 mm, inbesondere beidseitig der Fuge. Alternativ, aber auch kumulativ kann die mindestens eine Schicht der zweiten Masse in einer Aufweitung der Fuge an deren oberem Fugenrand aufgenommen sein.

Die zweite Masse kann als Band oder als formlose Masse ausgebildet sein. Als Band kann sie z. B. über einer in einer Fuge eingebrachten mindestens einen Schicht der ersten Masse angeordnet werden, wobei eine Verwachsung der Schichten, bevorzugt bei erhöhten Temperaturen, erfolgt, wobei eine Restwärme der ersten Masse oder eine Temperatur von z. B. 23°C ausreichend ist.

Darüber hinaus ermöglichen die ersten und zweiten Massen auch eine gute Verbindung bei Anschlüssen zu anderen Bitumenfugenmassen, da eine Diffusion in diese und aus diesen in die ersten und zweiten Massen auch nach Abkühlung ermöglicht ist. Auch können Fugen und Risse einfach Instand gesetzt werden, insbesondere Wartungsfugen, da sich die ersten und zweiten Massen gut an älteres Bitumenfugenmaterial anbauen lassen und sich beispielsweise mit einem heißen Messer oder Spachtel einfach nacharbeiten lassen.

Weiterhin kann die erste und zweite Masse auch sonstige übliche Additive umfassen. Insbesondere kann die erste und/oder zweite Masse umfassen Antioxidationsmittel, thermische Stabilisationsmittel und sonstige Stabilisatoren. Soweit Antioxidationsmittel vorgesehen werden, sind diese in der ersten und/oder zweiten Masse zugegen in einer Menge in einem Bereich von etwa 0,05 Gew.-% bis etwa 0,8 Gew.-%, bevorzugt in einer Menge in einem Bereich von etwa 0,1 Gew.-% bis etwa 0,45 Gew.-%, wobei die Gew.-% jeweils bezogen sind auf die Gesamtmenge der ersten beziehungsweise zweiten Masse. Soweit in der ersten und/oder zweiten Masse thermische Stabilisationsmittel und sonstige Stabilisatoren zugegen sind, sind diese von der ersten oder zweiten Masse umfasst in einer Menge in einem Bereich von etwa 0,1 Gew.-% bis etwa 1 Gew.-%, weiter bevorzugt in einer Menge in einem Bereich von etwa 0,15 Gew.-% bis etwa 0,6 Gew.-%, wobei die Gew.-% jeweils bezogen sind auf die Gesamtmenge der ersten oder zweiten Masse.

Besonders bevorzugt umfasst die erste Masse etwa 46 Gew.-% bis etwa 60 Gew.-% mindestens eines Bitumens, insbesondere eines Bitumens mit einer Nadelpenetration in einem Bereich von etwa 160 bis etwa 220, als Elastomer mindestens ein Styrol-Isopren-Styrolblockcopolymer in einer Menge in einem Bereich von etwa 5 Gew.-% bis etwa 10 Gew.-%, Gummimehl, insbesondere als Rezyklat, in einer Menge in einem Bereich von etwa 4 Gew.-% bis etwa 10 Gew.-%, mindestens ein Wachs, insbesondere ein Montanwachs, in einer Menge in einem Bereich von etwa 1 Gew.-% bis etwa 2 Gew.-%, als faserförmiges Stellmittel Cellulose, insbesondere Cellulose mit einer durchschnittlichen Faserlänge in einem Bereich von etwa 600 µm bis etwa 1500 µm, in einer Menge in einem Bereich von etwa 1 Gew.-% bis etwa 4 Gew.-%, mindestens ein gepropftes Polymer, hergestellt aus Ethylen und/oder Propylen und Maleinsäureanhydrid, in einer Menge in einem Bereich von etwa 0,5 Gew.-% bis etwa 5 Gew.-% und einem Tropfpunkt in einem Bereich von etwa 100°C bis etwa 120°C, gemessen gemäß ASTM D3954, mindestens ein Prozessöl als Weichmacher in einer Menge in einem Bereich von etwa 5 Gew.-% bis etwa 16 Gew.-%, als mineralischen, pulverförmigen Füllstoff Talkum in einer Menge in einem Bereich von etwa 13 Gew.-% bis etwa 22 Gew.-%, sowie gegebenenfalls weitere Additive wie Antioxidantien, thermische Stabilisatoren und sonstige Stabilisationsmittel in einer Menge insgesamt in einem Bereich von 0,2 Gew.-% bis etwa 1 Gew.-%, wobei die vorgenannten Gew.-%-Angaben jeweils bezogen sind auf die Gesamtmenge der ersten Masse.

Besonders bevorzugt umfasst die titandioxidhaltige und bitumenhaltige zweite Masse etwa 35 Gew.-% bis etwa 44,5 Gew.-% mindestens eines Bitumens, insbesondere eines Bitumens mit einer Nadelpenetration in einem Bereich von etwa 160 bis etwa 220, als Elastomer mindestens ein Styrol-Isopren-Styrol-(Block-) Copolymer in einer Menge in einem Bereich von etwa 3,5 Gew.-% bis etwa 7 Gew.-%, Gummimehl, insbesondere als Recyclat, in einer Menge in einem Bereich von etwa 3 Gew.-% bis etwa 6 Gew.-%, mindestens ein Wachs, insbesondere ein Montanwachs, in einer Menge von etwa 0,5 Gew.-% bis etwa 1,5 Gew.-%, als faserförmiges Stellmittel Cellulose, insbesondere Cellulose mit einer durchschnittlichen Faserlänge in einem Bereich von etwa 600 µm bis etwa 1.500 µm, in einer Menge in einem Bereich von etwa 1 Gew.-% bis etwa 2 Gew.-%, mindestens ein gepfropftes Polymer, hergestellt aus Ethylen und/oder Propylen und Maleinsäureanhydrid, in einer Menge in einem Bereich von etwa 0,5 Gew.-% bis etwa 1 Gew.-% und mit einem Tropfpunkt in einem Bereich von etwa 100°C bis etwa 120°C, gemessen gemäß ASTM D3954, mindestens ein Prozessöl als Weichmacher in einer Menge in einem Bereich von etwa 6 Gew.-% bis etwa 13 Gew.-%, als mineralischen, pulverförmigen Füllstoff Talkum in einer Menge in einem Bereich von etwa 10 Gew.-% etwa 16 Gew.-%, mindestens ein Titandioxid mit Anatas-Struktur in Pulverform mit einer Schüttdichte in einem Bereich von etwa 500 kg/m³ bis etwa 650 kg/m³ in einer Menge in einem Bereich von etwa 21 Gew.-% bis etwa 29 Gew.-%, sowie gegebenenfalls weitere Additive wie Antioxidantien, thermische Stabilisatoren und sonstige Stabilisationsmittel in einer Menge insgesamt in einem Bereich von etwa 0,35 Gew.-% bis etwa 0,7 Gew.-%, wobei sämtliche der vorgenannten Gewichtsprozentangaben jeweils bezogen sind auf die Gesamtmenge der zweiten Masse.

Die zweite Masse kann z. B. in Bandform vorliegen. Sie kann dann als Fugenabdeckband eingesetzt werden oberhalb mindestens einer Schicht der mindestens einen ersten Masse. Die Breite des Bandes ist vorzugsweise größer als eine Breite der Fuge und damit einer Breite der mindestens einen Schicht der ersten Masse. Die zweite Masse kann zu Verarbeitungszwecken aber auch in Riegelform hergestellt und dann plastifiziert und erwärmt werden, z. B. durch eine Extrusionsvorrichtung, um anschließend in eine Fuge als formlose Masse eingegeben zu werden. Auf gleiche Weise kann die erste Masse verarbeitet werden.

Die erfindungsgemäße Fugenabdichtung weist den großen Vorteil auf, dass bei Verwendung derselben insbesondere in vertikalen Fugen einerseits eine kostengünstige Verfüllung derselben möglich ist, insbesondere bei Betonschutzwänden. Durch den mindestens zweischichtigen Aufbau aus der ersten Masse und der zweiten Masse, welch letztere eine freiliegende Oberfläche bildet, wird zudem ein bestmöglicher Schutz zur Verfügung gestellt. Durch die Vorsehung des Titandioxids in der zweiten Masse, welche als im Verhältnis zur ersten Masse dünnere Schicht ausgetragen wird, wird zudem vorteilhafterweise erzielt, dass auch bei hohen Temperaturen, insbesondere hohen Sonneneinstrahlungen, auf Flächen, insbesondere gebildet durch Betonschutzwände, ein Verlaufen der Fugenabdichtung vermieden wird, so dass ein langanhaltender Schutz vor Korrosionen gleich welcher Art durch die erfindungsgemäße Fugenabdichtung zur Verfügung gestellt ist.

Besonders bevorzugt umfasst die erfindungsgemäße Fugenabdichtung mindestens eine Unterfüllung. Die mindestens eine Unterfüllung ist unterhalb der mindestens einen Schicht der ersten Masse angeordnet. Bevorzugt ist diese am Fugengrund der zu verfüllenden Fuge angeordnet. Vorteilhafterweise verhindert die Unterfüllung eine 3-Flächen-Haftung der mindestens einen Schicht der ersten Masse, nämlich sowohl an den Fugenflanken als auch am Untergrund. Letztere wird damit vorteilhafterweise vermieden. Vorteilhafterweise ist die Unterfüllung ausgewählt aus einer Gruppe umfassend Silikonpapier oder Rundschnur oder Kunststoffeinlage, welche sowohl flächig, insbesondere mit einem viereckigen Querschnitt, als auch rund ausgebildet sein kann. Die Unterfüllung ist insbesondere aus einem geschäumten Kunststoff, der vorteilhafterweise geschlossenporig ist, hergestellt.

In einer weiter bevorzugten Ausführungsform der erfindungsgemäßen Fugenabdichtung ist unterhalb der mindestens einen Schicht der ersten Masse ausgehend von einem Fugengrund der Fuge ein Kerbschnitt vorgesehen. Dieser befindet sich weiter bevorzugt unterhalb der Unterfüllung. Weiter bevorzugt befindet sich dieser auch unterhalb der mindestens einen Schicht der zweiten Masse.

Die vorliegende Erfindung betrifft außerdem eine Fuge mit einer erfindungsgemäßen Fugenabdichtung wie vorstehend beschrieben. Besonders bevorzugt weist dabei die Fuge an einem Fugengrund einen Kerbschnitt auf. Weiter bevorzugt weist die Fuge in ihrem oberen Bereich, in welchem die mindestens eine Schicht der zweiten Masse eingegeben wird, eine Aufweitung auf, so dass die zumindest eine Schicht der zweiten Masse vollständig die darunter angeordnete mindestens eine Schicht der ersten Masse abdeckt.

Die erfindungsgemäße Fugenabdichtung ist vorteilhafterweise derart aufgebaut, dass diese genau eine Schicht der bitumenhaltigen ersten Masse und genau eine Schicht der bitumen- und titandioxidhaltigen zweiten Masse aufweist, wobei die zweite Masse oberhalb der ersten Masse angeordnet ist und eine freiliegende Oberfläche bildet, wobei weiterhin unterhalb der einen Schicht der ersten Masse genau eine Unterfüllung vorgesehen ist, die geeignet ist, einen Kontakt der ersten Masse mit einem Fugengrund zu vermeiden. Weiter bevorzugt ist die erfindungsgemäße Fugenabdichtung derart ausgebildet, dass die mindestens eine, bevorzugt genau eine Schicht der zweiten Masse seitlich die mindestens eine Schicht, bevorzugt genau eine Schicht, der bitumenhaltigen ersten Masse überragt.

Die erfindungsgemäße Fuge weist bevorzugt eine erfindungsgemäße Fugenabdichtung, wie vorstehend in ihrem Aufbau beschrieben, auf. Sie weist besonders bevorzugt im Bereich der Schicht der zweiten Masse eine Verbreiterung bzw. Aufweitung, die bevorzugt an eine Oberfläche, z. B. einer Verkehrsfläche, angrenzt, auf. Weiter bevorzugt weist die erfindungsgemäße Fuge bei einem derartigen Aufbau ausgehend vom Fugengrund einen Kerbschnitt auf. Besonders bevorzugt weist die Fuge ausgehend von einer Oberfläche, zum Beispiel einer Verkehrsfläche oder einer Betonschutzwand, eine Tiefe in einem Bereich von etwa 20 mm bis etwa 40 mm, bevorzugt in einem Bereich von etwa 22 mm bis etwa 30 mm auf. Weiter bevorzugt weist die Fuge eine Breite in einem Bereich von etwa 8 mm bis etwa 35 mm, weiter bevorzugt in einem Bereich von etwa 12 mm bis etwa 25 mm, auf und zwar im Bereich der mindestens einen Schicht der ersten und/oder zweiten Masse. Im Bereich der mindestens einen Schicht mit der zweiten Masse weist weiter bevorzugt die Fuge eine Aufweitung seitlich um etwa 1 bis etwa 2 mm auf, verglichen mit der vorstehend beschriebenen Fugenbreite. Der Kerbschnitt weist bevorzugt eine Tiefe in einem Bereich zwischen etwa 8 mm und etwa 25 mm auf. Der Kerbschnitt ist vorteilhafterweise in etwa mittig am Fugengrund der erfindungsgemäßen Fuge angeordnet. Der Kerbschnitt weist vorteilhafterweise eine Breite in einem Bereich von etwa 3 bis etwa 15 mm, weiter bevorzugt in einem Bereich von etwa 5 mm bis etwa 12 mm auf. Die vorliegende Erfindung betrifft ebenfalls eine Betonschutzwand mit einer erfindungsgemäßen Fuge bzw. Fugenabdichtung.

Die erfindungsgemäße Fugenabdichtung wird vorzugsweise in Kombination mit einem Haftvermittler in Form eines Primers beziehungsweise Voranstriches beziehungsweise Haftvermittlers verarbeitet. Die vorliegende Erfindung betrifft daher auch ein System, umfassend die erfindungsgemäße Fugenabdichtung zum Ausfüllen und Verfüllen von Fugen und/oder Rissen mit einer ersten Masse, einer zweiten Masse als auch mindestens einen Haftvermittler und/oder mindestens eine Unterfüllung. Bevorzugt ist genau ein Haftvermittler vorgesehen. Der Haftvermittler dient insbesondere der Zurverfügungstellung einer besseren Haftung, insbesondere in Vertikalfugen beziehungsweise -rissen, insbesondere an Kontaktflächen, die aus Beton, Gussasphalt, Walzasphalt, Stahl beziehungsweise Edelstahl, aber auch halbstarren Deckschichten. Halbstarre Deckschichten werden auch als halbstarrer Belag oder vermörtelter Belag bezeichnet. Es sind bitumengebundene Bodenbeläge mit einem bitumengebundenen Traggerüst, dessen Hohlräume mit einem Mörtel gefüllt sind.

Der Haftvermittler kann insbesondere ausgebildet sein auf Grundlage einer Mischung umfassend etwa 2 Gew.-% bis etwa 9 Gew.-% mindestens eines Styrol-Isopren-Polymers, insbesondere Blockpolymers, insbesondere Triblockpolymers, insbesondere mit etwa 10 % bis etwa 20 % Styrol in der Masse, etwa 16 Gew.-% bis etwa 40 Gew.-% mindestens eines Kohlenwasserstoffharzes, insbesondere eines cyclischen und/oder linearen aliphatischen Kohlenwasserstoffharzes, insbesondere mit einem Erweichungspunkt in einem Bereich von etwa 80 °C bis etwa 110 °C, und etwa 54 Gew.-% bis etwa 82 Gew.-% mindestens eines Lösemittels, insbesondere eines linearen oder cyclischen aliphatischen und/oder aromatischen Lösemittels, insbesondere Benzin und/oder Xylol, insbesondere mit einer Dichte (20 °C) gemäß DIN 51757 in einem Bereich von etwa 0,67 bis etwa 0,95 g/ml. Besonders bevorzugt ist der Haftvermittler ausgebildet auf Grundlage einer Mischung umfassend etwa 2 Gew.-% bis etwa 9 Gew.-% mindestens eines Styropol-Isopren-Polymers wie vorstehend beschrieben, etwa 8 Gew.-% bis etwa 20 Gew.-% eines insbesondere linearen aliphatischen Kohlenwasserstoffharzes, vorzugsweise einem solchen mit einem Erweichungspunkt in einem Bereich von etwa 90 °C bis 110 °C, eines cycloaliphatischen Kohlenwasserstoffharzes in einer Menge in einem Bereich von etwa 8 Gew.-% bis 20 Gew.-%, vorzugsweise mit einem solchen mit Erweichungspunkt in einem Bereich von etwa 80 °C bis etwa 95 °C, etwa 50 Gew.-% bis etwa 70 Gew.-% Benzin als Lösemittel mit einer Dichte in einem Bereich von etwa 0,67 g/ml bis etwa 0,77 g/ml bei 20 °C gemäß DIN 51757, und etwa 4 Gew.-% bis etwa 12 Gew.-% Xylol als aromatisches Lösemittel. Besonders bevorzugt umfasst die Mischung des Haftvermittlers etwa 4 Gew.-% bis etwa 6 Gew.-% des mindestens einen Styrol-Isopren-Polymers wie vorstehend beschrieben, etwa 10 Gew.-% bis etwa 15 Gew.-% mindestens eines insbesondere linearen aliphatischen Kohlenwasserstoffharzes, etwa 10 Gew.-% bis etwa 15 Gew.-% mindestens eines cycloaliphatischen Kohlenwasserstoffharzes, wie vorstehend beschrieben, etwa 58 Gew.-% bis etwa 65 Gew.-% mindestens eines linearen und/oder cyclischen aliphatischen Lösemittels, sowie etwa 5 Gew.-% bis etwa 9 Gew.-% mindestens eines aromatischen Lösemittels, insbesondere Xylol.

Alternativ kann der Haftvermittler auch eine Zusammensetzung aufweisen wie die in der EP 2 557 230 A2 offenbarte Kleberschicht. Die Offenbarung der EP 2 557 230 A2 wird hiermit vollumfänglich zum Gegenstand der vorliegenden Anmeldung gemacht, soweit diese die Ausgestaltung der Klebeschicht betrifft. Insbesondere ist der Haftvermittler im Sinne der vorliegenden Erfindung damit ein solcher, welcher bitumenhaltig ist und Styrol-Isopren-Copolymere und/oder Styrol-Butadien-Blockcopolymere, aliphatische Kohlenwasserstoffharze, sowie Mineralöl als auch als Füllmaterial insbesondere Kalksteinmehl oder Ähnliches umfasst. Vorteilhafterweise umfasst die Klebeschicht mindestens ein thermoplastisches Harz, insbesondere in Form eines Kohlenwasserstoffharzes, in einer Menge in einem Bereich von etwa 30 Gew.-% bis etwa 60 Gew.-%, bezogen auf die Gesamtmasse des Haftvermittlers. Das Hinterfüllprofil dient dazu, insbesondere eine 3-Seitenhaftung zu vermeiden. Es verhindert die Ausbildung einer Haftung der Masse an z.B. einem Fugen- oder Rissgrund.

Eine Verwendung einer titandioxidhaltigen Masse wie vorstehend beschrieben zur Verfüllung von Fugen und/oder Rissen in horizontalen und/oder vertikalen Flächen, besonders bevorzugt zur Verfüllung von Fugen in Betonteilen, insbesondere in Betonschutzwänden, ist bevorzugt. Besonders bevorzugt ist eine Verwendung, bei welcher die titandioxidhaltige und bitumenhaltige zweite Masse nach Einbringung, gleich ob formlos oder in Bandform, in bzw. auf der Fuge eine freiliegende Oberfläche bildet, die bevorzugt mehr oder weniger eben mit der angrenzenden Oberfläche, beispielsweise eines Betonteils, insbesondere einer Betonschutzwand, abschließt. Weiter bevorzugt ist eine Verwendung, bei welcher auf mindestens einer Schicht einer bitumenhaltigen ersten Masse die titandioxidhaltige und bitumenhaltige erfindungsgemäße zweite Masse angeordnet wird. Im Übrigen sei zu den möglichen Verwendungen und Ausgestaltungen der Fuge und der Fugenabdichtung betreffend die diesbezüglichen Verwendungen der titandioxidhaltigen und bitumenhaltigen zweiten Masse auf das Vorstehende verwiesen.

Ein Verfahren zur Einbringung der mindestens einen Schicht der bitumenhaltigen ersten Masse und der mindestens einen Schicht der titandioxidhaltigen und bitumenhaltigen zweiten Masse zur Erstellung der erfindungsgemäßen Fugenabdichtung ist beispielsweise beschrieben in der WO 2014/173513 A1, deren Offenbarung insoweit zum Gegenstand der vorliegenden Anmeldung gemacht wird.

Die erste oder zweite Masse wird zur Verfüllung einer Fuge und/oder eines Risses derart eingesetzt, dass die Massen erwärmt und mittels einer Kartuschenpistole oder eines Handextruders in eine Fuge oder einen Riss eingebracht werden. Bei Vertikalfugen oder -rissen wird vorteilhafterweise eine Kartuschenpistole mit erwärmter Kartusche oder erwärmter Masse, die in die Kartusche eingebracht wird, eingesetzt. Für Horizontalfugen oder-risse können auch andere Verfahren eingesetzt werden, so beispielsweise der Einsatz von Heißvergusskochern, insbesondere solchen mit Austraglanze und Pumptechnik. Auch kann die erste und die zweite Masse durch Vergießen, Austrag aus einer Düse, Zwangsförderung aus einem Behälter jeglicher Art oder sonstige bekannte Techniken oder aber in Bandform verarbeitet werden. Bevorzugt erfolgt die Erwärmung der Masse in der Kartuschenpistole durch Einlegung der Pistole in einen zwei- oder mehrteiligen Aufheizblock, der aber auch einteilig ausgebildet sein kann, mit mindestens einer in diesem angeordneten Heizpatrone oder Heizstab. Alternativ hierzu kann die Erwärmung auch beispielsweise durch Erwärmung der gefüllten Kartuschenpistole in einem elektrischen oder mit Gas beheizten Ofen erfolgen. Wird ein Aufheizblock eingesetzt, so ist vorteilhafterweise vorgesehen, dass dieser mindestens zwei, bevorzugt mindestens drei, weiter bevorzugt mindestens vier Kartuschenpistolen aufnehmen kann. Vorteilhafterweise besteht der Aufheizblock aus Metall, weiter vorteilhafterweise aus Eisen und/oder Aluminium oder entsprechenden, insbesondere gut wärmeübertragenden Legierungen. Die Kartuschen werden mit der ersten und/oder zweiten Masse entweder im schmelzflüssigen Zustand oder in Form von vorgefertigten Riegeln oder in Granulatform befüllt.

Die erste und/oder zweite Masse sind vorteilhafterweise bei Raumtemperatur (25 °C) fest, und gehen bei Temperaturen von über 85 °C in einen pastösen Zustand über. Die dynamische Viskosität, gemessen gemäß DIN EN 13702, liegt vorteilhafterweise bei einer Temperatur von 100 °C in einem Bereich von etwa 75 Pa·s bis etwa 110 Pa·s, und bei einer Temperatur von 110 °C in einem Bereich von etwa 45 Pa·s bis etwa 70 Pa·s, wobei die Viskosität gemessen wurde mit einer Scherrate von 20 s⁻¹.

Der Aufheizblock weist vorteilhafterweise eine elektrische Regelung des Aufheizvorganges auf, welche bei einer mobilen Anwendung z. B. auch durch einen Stromgenerator oder eine sonstige zur Verfügung gestellte mobile Stromzufuhr erfolgen kann. Vorteilhafterweise weist der Aufheizblock bei einer Ausführung für die Aufnahme mindestens einer Kartuschenpistole zwei Heizpatronen oder -stäbe, bei einer Ausführung für mindestens zwei Kartuschenpistolen drei Heizpatronen oder -stäbe, bei einer Ausführung für mindestens drei Kartuschenpistolen vier Heizpatronen oder -stäbe und bei einer Ausführung für mindestens vier Kartuschenpistolen fünf Heizpatronen oder -stäbe auf, welche links und rechts der Längsseiten der Kartuschenpistolen im Heizblock angeordnet sind. Hierzu weist der Heizblock im Inneren Kanäle oder Hohlräume auf, durch welche Kabel zum Anschluss der Heizpatronen verlegbar als auch die Heizpatronen oder-stäbe aufnehmbar sind. Durch die Ausgestaltung eines derartig ausgebildeten Aufheizblockes ist vorteilhafterweise eine gleichmäßige Erwärmung der ersten und/oder zweiten Masse ermöglicht. Nach Erwärmung beträgt vorteilhafterweise die Verarbeitungszeit für die erste und/oder zweite Masse bis zu etwa dreißig Minuten, je nach Verarbeitungsbedingungen, gegebenenfalls auch länger. Wird die erste und/oder zweite Masse in der Kartuschenpistole zu kalt, kann diese einfach in den Aufheizblock wieder eingelegt werden.

Alternativ zum Einsatz eines Aufheizblockes zur Erwärmung der ersten und/oder zweiten Masse in einer Kartuschenpistole kann auch ein Austrag der ersten und/oder zweiten Masse aus einem Handextruder, der beheizt ist, erfolgen. Der Handextruder weist dabei vorteilhafterweise eine oder mehrere Förderschnecken auf. Die erste und/oder zweite Masse wird bevorzugt in Form von Riegeln, oder aber auch als Granulat, in den Handextruder eingefüllt. Besonders bevorzugt ist eine kontinuierliche Zuführung in den Handextruder bei Ausgestaltung der ersten und/oder zweiten Masse in Bandform.

Vorteilhafterweise wird die erste und/oder zweite Masse in einem Doppelschneckenextruder plastifiziert und erwärmt vor Austragung in eine Kartuschenpistole oder einen Handextruder. Dabei kann grundsätzlich eine Vorrichtung vorgesehen werden, wie diese beispielsweise in der EP 0 646 675 B1 offenbart ist, wobei deren diesbezügliche Offenbarung hiermit zum Gegenstand der vorliegenden Erfindung gemacht wird. Die erste und/oder zweite Masse, die bei üblichen Umgebungstemperaturen beziehungsweise Verarbeitungstemperaturen fest ist, kann dabei in Form von Riegeln dem Doppelschneckenextruder, gegebenenfalls unter Einsatz sonstiger Hilfsmittel wie Walzenpressen oder ähnlichem, insbesondere über einen Trichter, zugeführt werden und wird dann in diesem plastifiziert, erwärmt und ausgetragen. Die Austragung erfolgt dabei vorzugsweise in eine Kartuschenpistole, die in eine Öffnung eines Adaptermittels, welches außen vor der Extruderdüse an selbiger angeordnet ist, mit ihrer Austragsspitze eingeführt wird, so dass dann durch den Austrag der Masse aus dem Doppelschneckenextruder die Kartuschenpistole befüllt wird. Die Kartuschenpistole ist dabei vorteilhafterweise mit einem Hubkolben, der hitzebeständig ist, und beispielsweise aus Aluminium gefertigt ist, ausgestattet, und weist ein ebenso aus einem hitzebeständigem Material gefertigtes Austrittsmittel mit Spitze, ebenfalls beispielsweise aus Aluminium gefertigtem, auf. Der Hubkolben weist dabei an seiner Endplatte vorteilhafterweise angeordnet an deren Außenumfang eine Ringdichtung auf, die den Kolben gegen die Innenwand des zylindrischen Gehäuses der Kartuschenpistole abdichtet.

Vorzugsweise weist der Doppelschneckenextruder ein kombiniertes Lager- und Mischteil auf, welches neben zwei ersten Ausnehmungen als Lager für die beiden Schnecken des Doppelschneckenextruders eine Vielzahl um diese Ausnehmungen herum angeordnete Durchtrittsöffnungen aufweist, durch welche die Masse gefördert wird. Das Lager- und Mischteil ist damit nachfolgend den beiden Schnecken in Förderrichtung im Doppelschneckenextruder sowie vor der Austrittsdüse desselben angeordnet. Durch die Vielzahl von Durchtrittsöffnungen wird eine hohe Homogenisierung der plastifizierten und erwärmten Masse erreicht.

Vorteilhafterweise liegt die Verarbeitungstemperatur der ersten und/oder zweiten Masse bei Verwendung einer Kartuschenpistole in einem Bereich von etwa 85 °C bis etwa 110 °C, weiter bevorzugt in einem Bereich von etwa 90 °C bis etwa 100 °C, wobei sich die Temperatur auf die Masse selbst bezieht. Wird z. B. ein Heißvergusskocher eingesetzt, kann die Verarbeitungstemperatur auch in einem Bereich von etwa 150 °C bis etwa 180 °C liegen.

Für die Ausbringung der mindestens einen Schicht einer titandioxidhaltigen und bitumenhaltigen zweiten Masse wird dabei vorteilhafterweise ein Handextruder oder eine Kartuschenpistole mit einer Austrittsdüse beziehungsweise -Öffnung verwendet, welche einen größeren Querschnitt aufweist als die Austrittsdüse beziehungsweise -öffnung eines Handextruders oder einer Kartuschenpistole, mit welcher die mindestens eine Schicht der bitumenhaltigen ersten Masse ausgetragen wird. Insbesondere kann bei dem Austrag der titandioxidhaltigen und bitumenhaltigen zweiten Masse aus einem Handextruder und einer Kartuschenpistole vorgesehen sein, dass die Austrittsdüse beziehungsweise -Öffnung in Form einer Flachdüse ausgestaltet ist, so dass sogleich eine mehr oder weniger definierte Schichtstärke der Schicht der zweiten Masse erzeugt werden kann. Soweit die Flachdüse vorteilhafterweise einen größeren Querschnitt aufweist als die Austrittsdüse beziehungsweise -öffnung, mit welcher die bitumenhaltige erste Masse ausgebracht wurde, erfolgt sogleich eine vollständige Überdeckung der mindestens einen Schicht der bitumenhaltigen ersten Masse durch die mindestens eine Schicht der titandioxidhaltigen und bitumenhaltigen zweiten Masse.

Eine Düse zur Verfüllung einer Fuge, insbesondere mit mindestens einer Schicht einer bitumenhaltigen ersten Masse und/oder mindestens einer Schicht einer bitumenhaltigen und titandioxidhaltigen zweiten Masse, weist mindestens eine an einem Düsenkopf angeordnete Düsenöffnung und ein an der Düsenöffnung angeordnetes Austragsteil auf, welches, insbesondere in einer Außenwandung, mindestens eine Austragsöffnung mit einer Austragsöffnungsfläche, bevorzugt in der Außenwandung, beabstandet von einer Öffnungsfläche der Düsenöffnung umfasst. Durch die Beabstandung der Austragsöffnungsfläche der Austragsöffnung von der Öffnungsfläche der Düsenöffnung kann die erfindungsgemäße Düse vorteilhafterweise in eine Fuge eintauchen, wobei sich dann aufgrund des als eine Art Vorsprung ausgebildeten Austragsteils zugleich aufgrund der dieses umgebenden Flächen des Düsenkopfes die Möglichkeit einer Anlage auf einer die Fuge angrenzenden Oberfläche, beispielsweise einer Verkehrsfläche oder aber dem Grund einer Aufweitung, angeordnet am Übergang der Fuge zu einer Oberfläche, beispielsweise einer Verkehrsfläche, ermöglicht ist.

Bevorzugt ist die Austragsöffnung des Austragsteils zumindest teilweise in etwa dreieckig ausgebildet. Sie kann jedoch auch beispielsweise in etwa viereckig, als Kreissegment oder aber aus radialen Kreissegmenten zusammengesetzt ausgebildet sein oder aber aus Kombinationen der vorstehend genannten Ausgestaltungen bestehen. Das Austragsteil ist vorteilhafterweise teilweise umfassend die Düsenöffnung am Düsenkopf angeordnet. Der Düsenkopf weist vorteilhafterweise eine im Querschnitt gesehen etwa dreieckige Ausgestaltung auf, wobei eine Spitze des Dreieckes vorteilhafterweise eine Glättungskante ausbildet. Weiter vorteilhafterweise ist dabei im Querschnitt gesehen der Düsenkopf nicht als gleichschenkliges Dreieck ausgebildet, so dass im Bereich einer Dreiecksfläche, die größer ist als die andere, vorteilhafterweise die Düsenöffnung angeordnet ist. Diese Düsenöffnung zumindest teilweise umfassend ist das Austragsteil ausgebildet.

Besonders bevorzugt umfasst das Austragsteil mindestens eine Seitenwandung. Durch diese Seitenwandung ist eine Beabstandung der Austragsöffnungsfläche der Austragsöffnung des Austragsteiles von der Öffnungsfläche der Düsenöffnung einfach ermöglicht. Besonders bevorzugt ist die Seitenwandung auf drei Seiten des Austragsteils vorgesehen. Weiter bevorzugt weist die Seitenwandung eine gleichmäßige Höhe auf. Es kann jedoch auch vorgesehen sein, dass beispielsweise ansteigend von der der Austragsöffnung gegenüberliegenden Seite die Seitenwandung eine ansteigende Höhe auf die Austragsöffnung zu aufweist. Besonders bevorzugt ist die mindestens eine Seitenwandung zumindest teilweise unterbrochen zur Bildung eines Teils der Austragsöffnung. Die Austragsöffnung wird vorteilhafterweise gebildet einerseits durch die Unterbrechung der mindestens einen Seitenwandung, andererseits durch den Teil der Austragsöffnung in einer Außenwandung des Austragsteils, welche die Austragsöffnungsfläche definiert. In einer besonders bevorzugten Ausführungsform erfolgt die Unterbrechung der Seitenwandung des Austragsteils vor einer Öffnungskante der Düsenöffnung. Mit anderen Worten enden bevorzugt sich gegenüberliegende Seitenwandungen des Austragsteils vor Erreichung einer Öffnungskante der Düsenöffnung. Durch diese bevorzugte Ausführungsform ist es ermöglicht, dass aus der Austragsöffnung austretendes Material, insbesondere in Form der verfüllbaren ersten und/oder zweiten Masse, auch in Bereiche seitlich der Austragsöffnung gelangen kann, um so eine Überdeckung einer Fläche, sei diese gebildet innerhalb einer Fuge oder aber durch eine Oberfläche angrenzend an eine Fuge, zu ermöglichen.

In einer besonders bevorzugten Ausführungsform sind auf zwei sich gegenüberliegenden Seiten des Austragsteils am Düsenkopf Anlageflächen gebildet. Insbesondere in den Bereich dieser Anlageflächen kann aufgrund der spezifischen Ausgestaltung der Austragsöffnung einfach verfüllbare Masse gelangen bei Einsatz der Düse.

In einer bevorzugten Ausführungsform weist der Düsenkopf mindestens eine Glättungskante auf. Diese Glättungskante ist vorzugsweise an der Spitze eines Dreiecks angeordnet, wobei der Düsenkopf im Querschnitt gesehen eine vorzugsweise dreieckige Ausgestaltung aufweist. Weiter bevorzugt umfasst die Düse einen Düsengrundkörper, der weiter bevorzugt in den Düsenkopf übergeht und weiter bevorzugt gegenüberliegend dem Düsenkopf einen Flansch aufweist, wobei vorzugsweise der Düsengrundkörper mindestens eine umlaufende Nut an dessen Außenumfang aufweist. Es können auch beispielsweise zwei oder drei Nute vorgesehen werden. Die Nute ermöglichen einfach eine Arretierung der erfindungsgemäßen Düse, die Bestandteil beispielsweise einer Austragsvorrichtung ist, beispielsweise einer Kartuschenpistole oder eines Handextruders, z. B. an einem Doppelschneckenextruder, mittels welchem eine Plastifizierung von z.B. in Riegelform vorliegender erster und/oder zweiter Masse erfolgt und über welchen dann in die Austragsvorrichtung die plastifizierte und erwärmte erste und/oder zweite Masse ausgetragen wird. Der Doppelschneckenextruder kann dafür beispielsweise bewegliche Eingreifvorrichtungen, z. B. in Form von Clipsen, aufweisen, die in die mindestens eine Nut eingreifen und so die Arretierung der Austragsvorrichtung mit der Düse an dem Doppelschneckenextruder ermöglichen.

Es ist weiterhin eine Austragsvorrichtung mit mindestens einer Düse wie vorstehend beschrieben als auch die Verwendung der Düse und der Austragsvorrichtung zur Verfüllung von Fugen und/oder Rissen in horizontalen und/oder vertikalen Flächen, insbesondere zur Verfüllung von Fugen in Betonschutzwänden, mit verfüllbarer Masse offenbart. Weiter bevorzugt ist eine Verwendung, wobei die verfüllbare Masse mindestens eine erste bitumenhaltige und/oder eine zweite bitumenhaltige und titandioxidhaltige Masse im Sinne der vorliegenden Erfindung ist.

Weiterhin ist ein Verfahren zur Verfüllung einer Fuge, insbesondere einer erfindungsgemäßen Fuge, unter Verwendung der Düse bzw. der Austragsvorrichtung offenbart, wobei Letztere insbesondere eine Kartuschenpistole oder aber ein Handextruder sein kann, wobei Anlageflächen eines Austragsteils der Düse auf einer Oberfläche links und rechts einer Fuge oder aber einer Aufweitung in der Fuge angeordnet und eine verfüllbare Masse, insbesondere eine erste und/oder eine zweite Masse im Sinne der vorliegenden Erfindung, über eine Austragsöffnung des Austragsteils der Düse in die Fuge ausgetragen wird. Weiter bevorzugt wird mittels einer Glättungskante der Düse eine Glättung der ausgebrachten Masse vorgenommen.

Die Düse bzw. die Austragsvorrichtung kommt vorteilhafterweise zum Einsatz sowohl bei der Verfüllung einer erfindungsgemäßen Fuge mit einer ersten Masse und einer zweiten Masse. Beispielsweise kann für die Verfüllung einer Fuge mit der ersten Masse eine Düse mit einer Breite des Austragsteils, wobei die Breite quer zur Verfüllrichtung, die durch den Verlauf der Fuge vorgegeben ist, ermittelt wird, entsprechend der Breite der Fuge selbst, in aller Regel etwas geringer als die Breite der Fuge selbst, eingesetzt werden, wobei die links und rechts des Austragsteils angeordneten Auflageflächen des Düsenkopfes der Düse auf einer Oberfläche angrenzend links und rechts der Fuge zur Anlage kommen, oder aber, so die Fuge eine Aufweitung angrenzend einer Oberfläche aufweist, auf dem Grund dieser Aufweitung angeordnet werden. Hierdurch wird dann eine saubere Verfüllung der Fuge mit der ersten Masse bei einer gleichzeitigen Glättung, wobei aufgrund der Ausgestaltung des Austragsteils auch eine Zentrierung der Düse bei der Verfüllung innerhalb der Fuge erfolgt, erreicht.

Weist die Fuge angrenzend zu einer Oberfläche links und rechts derselben eine Aufweitung auf, kann die Fuge mit erster Masse in mindestens einer Schicht verfüllt sein, beispielsweise mit der Austragsvorrichtung bzw. der Düse, aber auch auf übliche Art und Weise, worauf dann mindestens eine Schicht der mindestens einen zweiten Masse aufgetragen wird, bevorzugt mit der Düse oder der Austragsvorrichtung, wobei die Düse dann eine größere Breite aufweist als die vorstehend bei der Verfüllung der ersten Masse eingesetzten beschriebenen Düse. Die Breite der Austragsvorrichtung entspricht dann in etwa der Breite der Aufweitung angrenzend der Oberfläche links und rechts der Fuge, wobei die Breite des Austragsteils bevorzugt etwas geringer als die Breite der Aufweitung ist, so dass dann einerseits eine Zentrierung dieser Düse in der Aufweitung bei der Verfüllung der zweiten Masse erzielt wird, gleichzeitig über die Glättungskante eine Glättung und aufgrund des Austretens der zweiten Masse auch in den Bereich der Anlageflächen links und rechts des Austragsteils aufgrund der spezifischen Ausbildung der Austragsöffnung eine Überdeckung der mindestens einen Schicht des ersten Materiales in der Fuge sicher und einfach erzielbar ist.

Diese und weitere Vorteile der vorliegenden Erfindung werden anhand des nachfolgenden Beispiels und der Figuren näher erläutert. Es zeigen
- Fig. 1:: einen schematischen Querschnitt durch eine erfindungsgemäße Fuge mit einer erfindungsgemäßen Fugenabdichtung und titandioxidhaltiger zweiter Masse;
- Fig. 2:: eine Draufsicht einer Düse für die Austragung der ersten bitumenhaltigen Masse oder der zweiten bitumenhaltigen und titandioxidhaltigen Masse;
- Fig. 3:: ein Querschnitt durch die Düse gemäß Fig. 2;
- Fig. 4:: eine perspektivische Ansicht der Düse gemäß Fig. 2; und
- Fig. 5:: eine weitere perspektivische Ansicht der Düse gemäß Fig. 2.

Zunächst sei vorausgeschickt, dass die in der Fig. dargestellte Ausgestaltung der erfindungsgemäßen Fugenabdichtung und Fuge nicht einschränkend auszulegen ist. Die Fuge kann beispielsweise auch anders ausgebildet sein, insbesondere keinen Kerbschnitt oder aber keine Verbreiterung im Bereich der zweiten Masse aufweisen, und die erfindungsgemäße Fugenabdichtung kann beispielsweise auch mehr als eine Schicht der bitumenhaltigen ersten Masse und mehr als eine Schicht der titandioxidhaltigen und bitumenhaltigen zweiten Masse aufweisen. Des Weiteren sei darauf hingewiesen, dass die in der Figurenbeschreibung angegebenen Bezugszeichen den Schutzbereich der vorliegenden Erfindung nicht beschränken, sondern lediglich auf das in der Fig. gezeigte Ausführungsbeispiel verweisen.

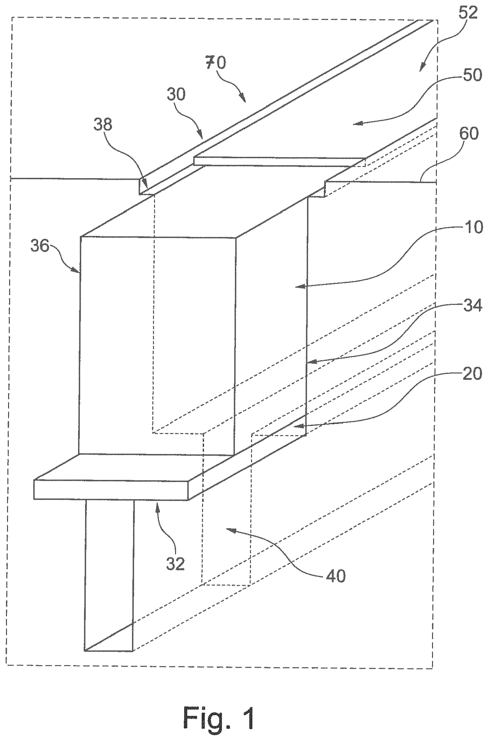

Fig. 1 zeigt eine erfindungsgemäße Fugenabdichtung 70 in einer Fuge 30 angeordnet. Die Fugenabdichtung 70 weist eine Unterfüllung 20 in Form eines im Querschnitt gesehen viereckigen Flachprofils, angeordnet an einem Fugengrund 32 der Fuge 30, auf. Oberhalb der Unterfüllung 20 ist genau eine Schicht einer bitumenhaltigen ersten Masse 34 angeordnet, die sich über nahezu die gesamte Höhe der Fuge 30 erstreckt. In einem oberen, einer Oberfläche 60, zum Beispiel einer Betonschutzwand, zugewandten Bereich der Fuge weist diese eine Aufweitung 38 auf. Im Bereich dieser Aufweitung 38 ist eine dünne Schicht einer titandioxidhaltigen und bitumenhaltigen zweiten Masse 50 aufgebracht, welches eine freiliegende Oberfläche 52 der erfindungsgemäßen Fugenabdichtung 10 bildet. Die Fuge 30 weist zwei gegenüberliegende Fugenflanken 34 und 36 auf, welche mit einem Haftvermittler vor Eindringung der ersten und der zweiten Masse 10 beziehungsweise 50 versehen werden können. Die Fuge 30 weist in etwa eine Tiefe von 30 mm und eine Breite von 15 mm auf, die Verbreiterung 38 eine Breite von 18 mm. Ausgehend vom Fugengrund 32 weist die Fuge 30 einen Kerbschnitt 40 auf, der eine Tiefe von etwa 25 mm und eine Breite von etwa 5 mm aufweist. Er ist in etwa zentral am Fugengrund 32 angeordnet.

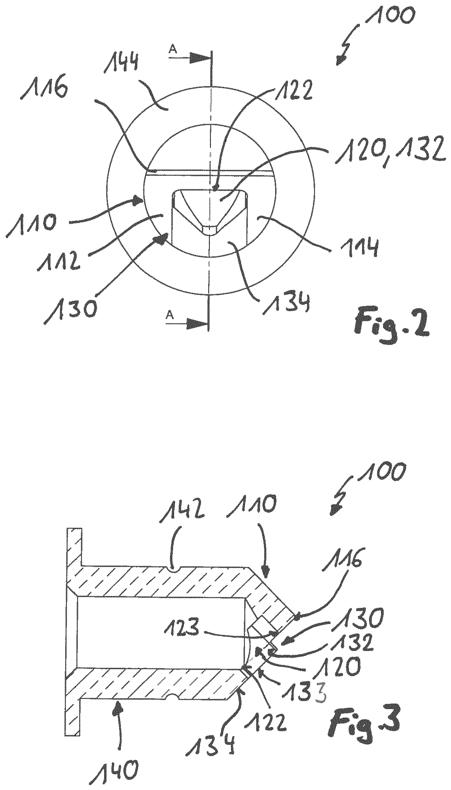

Fig. 2 zeigt eine Düse 100, mittels welcher bevorzugt eine erste bitumenhaltige Masse oder eine zweite bitumenhaltige und titandioxidhaltige Masse, aber auch andere Massen austragbar sind. Diese Düse 100 kann vorteilhafterweise Bestandteil einer Austragsvorrichtung (nicht gezeigt) sein, beispielsweise einer Kartuschenpistole oder aber eines Handextruders. Die Düse 100 weist einen Flansch 144 und gegenüberliegend einen Düsenkopf 110, der im Querschnitt gesehen in etwa dreieckig ausgebildet ist (siehe Fig. 3), auf. Der Düsenkopf 110 weist in seiner Spitze eine Glättungskante 116 als auch eine Düsenöffnung 120 mit einer Öffnungskante 123 auf, wobei durch die Düsenöffnung 120 eine Öffnungsfläche 122 (siehe Fig. 3) definiert ist. Der Düsenkopf 110 weist auf einer seiner Dreiecksflächen ein Austragsteil 130 auf, welches die Düsenöffnung 120 bis auf die Bildung einer Austragsöffnung 132 umfasst. Wie Fig. 3 entnommen werden kann, ist das Austragsteil 130 dabei in Teilen massiv mit dem Düsenkopf 110 ausgebildet. Es kann jedoch auch eine nicht massive Ausbildung vorgesehen sein. Links und rechts des Austragsteils 130 sind Anlageflächen 112 und 114 in der Dreiecksfläche des Düsenkopfes 110 gebildet, die der Anlage an eine Oberfläche, beispielweise links und rechts einer Fuge, oder aber einem Grund einer Aufweitung, wie in der allgemeinen Beschreibung bereits beschrieben, angrenzend einerseits an eine Oberfläche, beispielsweise eine Verkehrsfläche, andererseits an die Fuge, dienen.

Fig. 3 ist eine Schnittansicht der Düse 100 gemäß Fig. 2, aus welcher insbesondere gut die Ausgestaltung der Düsenöffnung 120 mit der Öffnungsfläche 122 als auch der Austragsöffnung 132 mit der Austragsöffnungsfläche 133 zu entnehmen ist, die beabstandet nach außen im Verhältnis zur Öffnungsfläche 122 der Düsenöffnung 120 ausgebildet ist. Das Austragsteil 130 ist vorspringend auf der Dreiecksfläche des Düsenkopfes 110 angeordnet. Des Weiteren ist Fig. 3 eine umlaufende Nut 142 an einem Düsengrundkörper 140 zu entnehmen, welche eine Arretierung bzw. Fixierung der Düse 100 beispielsweise an einem Doppelschneckenextruder im Rahmen der Befüllung einer Austragsvorrichtung, die die Düse 100 trägt, dient.

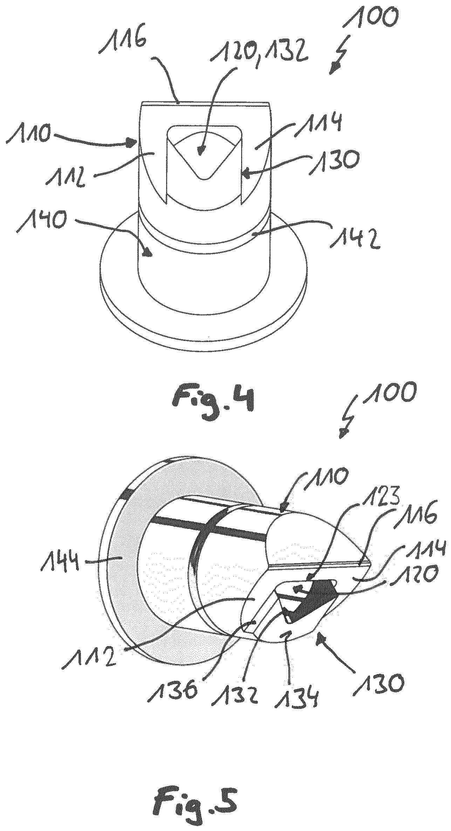

Fig. 4 zeigt in einer perspektivischen Ansicht die Düse 100 gemäß Fig. 2, ebenso die Fig. 5, wobei insbesondere aus Fig. 5 die vorspringende Ausbildung des Austragsteils 130 gut ersichtlich ist. Das Austragsteil 130 weist eine Außenwandung 134 auf und hieran anschließend auf drei Seiten jeweils eine Seitenwandung 136. Die Seitenwandungen 136 sind mit einem Rücksprung zu der Öffnungskante 122 der Düsenöffnung 120 ausgebildet. Die Austragsöffnung 132 selbst ist in etwa dreieckig ausgebildet mit einer offenen Grundkante bzw. - fläche auf die Öffnungskante 123 der Düsenöffnung 120 zu.

Die Anlageflächen 112 und 114 dienen beispielsweise einer Auflage auf einer Oberfläche 60 gemäß Fig. 1 oder aber einer Auflage auf dem Grund einer Aufweitung 38 gemäß Fig. 1. Im letzteren Falle wird dann die Breite des Austragsteils 130 in etwa der Breite der Fuge 30 gemäß Fig. 1 entsprechen und das Austragsteil 130 in diese Fuge 30 bei Einsatz der Düse 100 eintauchen. Dann kann die Fuge 30 gemäß Fig. 1 mit mindestens einer Schicht einer ersten Masse 10 verfüllt werden. Anschließend kann eine Düse 100 mit einem Austragsteil 130 mit einer größeren Breite eingesetzt werden, wobei dann Anlageflächen 112 und 114 mit der Oberfläche 60 gemäß Fig. 1 in Kontakt kommen und über das Austragsteil 130 die zweite Masse 50 in die Aufweitung 38 eingebracht werden kann, wobei das Austragsteil 130 dann in die Aufweitung 38 eintaucht. Wird beispielsweise mit einer Düse 100 die erste Masse 10 in eine Fuge 30 mit einer Aufweitung 38 eingebracht, kann nachfolgend aufgrund der glatten und geschlossenen Verfüllung der Fuge 30 im Bereich der Aufweitung 38 die zweite Masse 50 in Bandform eingebracht werden. Soweit eine Fuge 30 keine Aufweitung 38 gemäß Fig. 1 aufweist, kann beispielsweise eine erste Masse 10 in mindestens einer Schicht in die Fuge 30 gemäß Fig. 1 verfüllt werden und anschließend mit einer üblichen Flachdüse, die insbesondere kein Austragsteil 130 gemäß der Düse 100 aufweist, zweite Masse 50 zur Bildung einer zweiten Schicht ausgetragen werden, die dann teilweise die Oberfläche 60 links und rechts der Fuge 30 gemäß Fig. 1 überdeckt. So ist dann eine Fugenabdichtung 70 erzeugbar (s. Fig. 1).

Eine beispielhafte bitumenhaltige erste Masse wurde hergestellt aus 53 Gew.-% eines Bitumen mit einer Nadelpenetration bei 25°C gemäß DIN EN 1426 von etwa 160/0,1 mm bis etwa 220/0,1 mm, 7 Gew.-% eines Styrol-Isopren-Styrol/ Styrol-Isopren-(Block-)Copolymeren, 6 Gew.-% eines Gummimehls, hergestellt aus einem Recyclat aus Gummiprodukten, insbesondere Autoreifen mit einer Körnung in einem Bereich von > 0 bis etwa 0,5 mm, 1,5 Gew.-% eines Montanwachses mit einem Erstarrungspunkt in einem Bereich von etwa 130°C bis etwa 150°C, 1 Gew.-% eines gepfropften Etylen-Maleinsäureanhydrid-Copolymeren in Form von Pastillen, 12 Gew.-% eines naphthenischen Prozessöls als Weichmacher, 2 Gew.-% eines faserförmigen Stellmittels in Form von Cellulose-Fasern, wobei die Cellulose-Fasern eine durchschnittliche Faserlänge von etwa 1.000 µm und eine durchschnittliche Faserdicke von etwa 40 µm aufwiesen, 16,5 Gew.-% eines mineralischen, pulverförmigen Füllstoffes, nämlich Talkum, sowie 0,5 Gew.-% eines thermischen Stabilisators, eines Antioxidationsmittels als auch eines Stabilisationsmittels.

Eine titandioxidhaltige und bitumenhaltige zweite Masse wurde hergestellt aus 40 Gew.-% eines Bitumen mit einer Nadelpenetration bei 25°C gemäß DIN EN 1426 von etwa 160/0,1 mm bis etwa 220/0,1 mm, 5 Gew.-% eines Styrol-Isopren-Styrol/ Styrol-Isopren-(Block-)Copolymeren, 4 Gew.-% eines Gummimehls, hergestellt aus einem Recyclat aus Gummiprodukten, insbesondere Autoreifen mit einer Körnung in einem Bereich von > 0 bis etwa 0,5 mm, 1 Gew.-% eines Montanwachses mit einem Erstarrungspunkt in einem Bereich von etwa 130°C bis etwa 150°C, 0,7 Gew.-% eines gepfropften Etylen-Maleinsäureanhydrid-Copolymeren in Form von Pastillen, 9 Gew.-% eines naphthenischen Prozessöls als Weichmacher, 1,3 Gew.-% eines faserförmigen Stellmittels in Form von Cellulose-Fasern, wobei die Cellulose-Fasern eine durchschnittliche Faserlänge von etwa 1.000 µm und eine durchschnittliche Faserdicke von etwa 40 µm aufwiesen, 13 Gew.-% eines mineralischen Füllstoffes, nämlich Talkum, sowie 0,5 Gew.-% eines thermischen Stabilisators, eines Antioxidationsmittels als auch eines Stabilisationsmittels, sowie 25,5 Gew.-% eines pulverförmigen Titandioxids mit Anatas-Struktur.

Die wie vorstehend hergestellten ersten und zweiten Massen wiesen bei einer Temperatur von 100°C eine dynamische Viskosität, gemessen gemäß DIN EN 13702, bei einer Schärrate von 20 Sek.⁻¹ von 75 Pa·s (erste Masse) beziehungsweise 110 Pa·s (zweite Masse), bei einer Temperatur von 110°C von 45 Pa·s (erste Masse) beziehungsweise 67 Pa·s (zweite Masse), bei einer Temperatur von 120°C von 27 Pa·s (erste Masse) beziehungsweise 48 Pa·s (zweite Masse) und bei einer Temperatur von 130°C von 22 Pa·s (erste Masse) beziehungsweise 36 Pa·s (zweite Masse) auf.

Zur Herstellung der ersten und zweiten Massen wie vorstehend beschrieben wurden bei etwa 190°C sämtliche genannten Substanzen für 3 Stunden miteinander gemischt und verrührt. Anschließend wurden diese geformt zur Bildung von Riegeln oder, insbesondere bei der zweiten Masse, von Bändern und abkühlen gelassen. Die erste und zweite Masse in Riegelform kann dann insbesondere einem Doppelschneckenextruder zugeführt werden, so dass eine Verarbeitung vor Ort wie in der allgemeinen Beschreibung beschrieben erfolgen kann. Dabei kann über den Doppelschneckenextruder die erste beziehungsweise zweite Masse in eine Kartuschenpistole oder Handextruder, bevorzugt mit einer Düse wie in Fig. 2 bis 5 beschrieben, ausgetragen und über die Kartuschenpistole bzw. den Handextruder dann die Fuge, insbesondere eine vertikale Fuge in einer Betonschutzwand, verfüllt werden. Zum Auftrag der zweiten Masse wird dabei eine andere Austrittsdüse beziehungsweise -öffnung für die Kartuschenpistole bzw. den Handextruder eingesetzt, insbesondere eine Flachdüse, bevorzugt gemäß den Fig. 2 bis 5, weiter bevorzugt mit einem größeren Öffnungsdurchmesser, um eine Überdeckung der darunter angeordneten mindestens einen Schicht der ersten Masse zu erzielen, bevorzugt indem die Fuge eine Aufweitung zur angrenzenden Oberfläche aufweist, in die dann die zweite Masse einbringbar ist. Dabei kann vor Einbringung in eine Fuge eine Unterfüllung in diese eingelegt werden und die Fugenflanken mit einem Haftvermittler versehen werden, wie dies in der allgemeinen Beschreibung weiter oben beschrieben ist.

Sämtliche der vorstehend genannten Gewichtsprozentanteile beziehen sich auf die Gesamtmenge der ersten Masse beziehungsweise der zweiten Masse.

Mit der vorliegenden Erfindung ist eine Fugenabdichtung zur Verfügung gestellt, welche insbesondere bei vertikalen Fugen in Betonschutzwänden eine möglichst hohe Lebensdauer aufweist, da Korrosion und sonstige Arten von Undichtigkeiten in Betonschutzwänden gut unterbunden werden.

## Patentansprüche

1. Fugenabdichtung (70) für eine Fuge (30), umfassend mindestens eine Schicht einer bitumenhaltigen ersten Masse (10) und mindestens eine Schicht einer bitumenhaltigen zweiten, titandioxidhaltigen Masse (50), umfassend
- mindestens ein Bitumen in einer Menge in einem Bereich von etwa 25 Gew.-% bis etwa 60 Gew.-%;
- mindestens ein Elastomer, ausgewählt aus einer Gruppe umfassend Styrol-Butadien-Copolymere, Styrol-Butadien-Styrol-(Block-)Copolymere, Styrol-Isopren-(Block-)Copolymere und/oder Styrol-Isopren-Styrol-(Block-) Copolymere, synthetische und/oder natürliche Kautschuke, in einer Menge in einem Bereich von etwa 2 Gew.-% bis etwa 10 Gew.-%;
- mindestens einen pulverförmigen mineralischen Füllstoff in einer Menge in einem Bereich von etwa 7 Gew.-% bis etwa 25 Gew.-%;
- mindestens ein faserförmiges Stellmittel zur Einstellung der Festigkeit, ausgewählt aus einer Gruppe umfassend Zellulose, Glasfasern und/oder Kunststofffasern, in einer Menge in einem Bereich von etwa 0,3 Gew.-% bis etwa 5 Gew.-%;
- mindestens ein Polymer, hergestellt aus einem Olefin und einer a, β-ungesättigten Carbonsäure und/oder einem a, β-ungesättigtem Carbonsäureanhydrid, in einer Menge in einem Bereich von etwa 0,1 Gew.-% bis etwa 6 Gew.-%; und
- mindestens ein Titandioxid in einer Menge in einem Bereich von etwa 10 Gew.-% bis etwa 40 Gew.-%, wobei die Gewichtsprozente jeweils bezogen sind auf die Gesamtmenge der titandioxidhaltigen Masse,
wobei die mindestens eine Schicht der zweiten Masse (50) auf der mindestens einen Schicht der ersten Masse (10) angeordnet ist und eine freiliegende Oberfläche (52) bildet, wobei ein Verhältnis einer Schichtstärke der ersten Masse (10) und der zweiten Masse (50) in einem Bereich von etwa 250:1 bis etwa 1:1 beträgt, und wobei die zweite Masse (50) im Unterschied zu der ersten Masse (10) Titandioxid umfasst.

2. Fugenabdichtung (70) gemäß Anspruch 1, **dadurch gekennzeichnet, dass** das Titandioxid der titandioxidhaltigen Masse (50) eine Anatas-Struktur aufweist.

3. Fugenabdichtung (70) gemäß einem oder mehreren der Ansprüche 1 bis 2, **dadurch gekennzeichnet, dass** unterhalb der mindestens einen Schicht der ersten Masse (10) mindestens eine Unterfüllung (20) angeordnet ist.

4. Fugenabdichtung (70) gemäß einem oder mehreren der Ansprüche 1 bis 3, **dadurch gekennzeichnet, dass** unterhalb der mindestens einen Schicht der ersten Masse (10) und der mindestens einen Schicht der zweiten Masse (50) ein Kerbschnitt (40) an einem Fugengrund (32) angeordnet ist.

5. Fuge (30) mit einer Fugenabdichtung (70) gemäß einem oder mehreren der Ansprüche 1 bis 4.

6. Betonschutzwand mit mindestens einer Fuge (30) gemäß Anspruch 5 und/oder mindestens einer Fugenabdichtung (70) gemäß einem oder mehreren der Ansprüche 1 bis 4.

## Claims

1. Joint seal (70) for a groove (30), comprising at least one layer of a bituminous first mass (10) and at least one layer of a bituminous second mass (50) containing titanium dioxide, comprising
- at least one bitumen in an amount ranging from about 25 % to about 60 % by weight;
- at least one elastomer, selected from a group comprising styrene-butadiene copolymers, styrene-butadiene-styrene (block) copolymers, styrene-isoprene (block) copolymers and/or styrene-isoprene-styrene (block) copolymers, synthetic and/or natural rubbers, in an amount ranging from about 2% to about 10% by weight;
- at least one powdered mineral filler in an amount ranging from about 7% to about 25% by weight;
- at least one fibrous strength adjusting agent selected from a group comprising cellulose, glass fibers and/or plastic fibers, in an amount ranging from about 0.3% to about 5% by weight;
- at least one polymer prepared from an olefin and an α, β-unsaturated carboxylic acid and/or an α, β-unsaturated carboxylic acid anhydride, in an amount ranging from about 0.1% to about 6% by weight; and
- at least one titanium dioxide in an amount ranging from about 10% to about 40% by weight, wherein the weight percentages are each based on the total amount of the titanium dioxide-containing mass,
wherein the at least one layer of the second mass (50) is disposed on the at least one layer of the first mass (10) and forms an exposed surface (52), wherein a ratio of a layer thickness of the first mass (10) and the second mass (50) is in a range from about 250:1 to about 1:1, and wherein the second mass (50), unlike the first mass (10), comprises titanium dioxide.

2. Joint seal (70) according to claim 1, **characterized in that** the titanium dioxide of the titanium dioxide-containing mass (50) has an anatase structure.

3. Joint seal (70) according to one or more of the claims 1 to 2, **characterized in that** at least one underfill (20) is arranged below the at least one layer of the first mass (10).

4. Joint seal(70) according to one or more of the claims 1 to 3, **characterized in that** a notch (40) is arranged at a groove base (32) below the at least one layer of the first mass (10) and the at least one layer of the second mass (50).

5. Groove (30) having a joint seal (70) according to one or more of the claims 1 to 4.

6. Concrete protective wall having at least one groove (30) according to claim 5 and/or at least one joint seal (70) according to one or more of the claims 1 to 4.

## Revendications

1. Élément d'étanchéification (70) pour un joint (30), comprenant au moins une couche d'une première masse comprenant du bitume (10) et au moins une couche d'une deuxième masse comprenant du bitume et du dioxyde de titane (50), contenant
- au moins un bitume dans une proportion située sur une plage d'environ 25% en poids à environ 60% en poids,
- au moins un élastomère choisi parmi un groupe comprenant des copolymères de styrène-butadiène, des copolymères (à blocs) de styrène-butadiène-styrène, des copolymères (à blocs) de styrène-isoprène et/ou des copolymères (à blocs) de styrène-isoprène-styrène et des caoutchoucs synthétiques et/ou naturels dans une proportion située sur une plage d'environ 2% en poids à environ 10% en poids,
- au moins une charge minérale en poudre dans une proportion située sur une plage d'environ 7% en poids à environ 25% en poids,
- au moins un matériau de contrôle fibreux pour contrôler la solidité, choisi parmi un groupe comprenant de la cellulose, des fibres de verre et/ou des fibres de plastique, dans une proportion située sur une plage d'environ 0,3% en poids à environ 5% en poids,
- au moins un polymère fabriqué à partir d'une oléfine et d'un acide carboxylique insaturé α, β et/ou d'un anhydride d'acide carboxylique insaturé α, β dans une proportion située sur une plage d'environ 0,1% en poids à environ 6% en poids et
- au moins un dioxyde de titane dans une proportion située sur une plage d'environ 10% en poids à environ 40% en poids, les pourcentages se rapportant à la quantité totale de la masse comprenant du dioxyde de titane,
dans lequel l'au moins une couche de la deuxième masse (50) est disposée sur l'au moins une couche de la première masse (10) et forme une surface exposée (52), dans lequel un rapport des épaisseurs des couches de la première masse (10) et de la deuxième couche (50) est situé sur une plage d'environ 250:1 à environ 1:1 et dans lequel la deuxième masse (50), à la différence de la première masse (10), contient de l'oxyde de titane.

2. Élément d'étanchéification (70) selon la revendication 1, **caractérisé en ce que** le dioxyde de titane de la masse contenant du dioxyde de titane (50) présente une structure d'anatase.

3. Élément d'étanchéification (70) selon une ou plusieurs des revendications 1 à 2, **caractérisé en ce qu'**au moins une sous-couche (20) est disposée sous l'au moins une couche de la première masse (10).

4. Élément d'étanchéification (70) selon une ou plusieurs des revendications 1 à 3, **caractérisé en ce qu'**une encoche (40) est ménagée dans un fond de joint (32) au-dessous de l'au moins une couche de la première masse (10) et de l'au moins une couche de la deuxième masse (50).

5. Joint (30) avec élément d'étanchéification (70) selon une ou plusieurs des revendications 1 à 4.

6. Mur de protection en béton avec au moins un joint (30) selon la revendication 5 et/ou au moins un élément d'étanchéification (70) selon une ou plusieurs des revendications 1 à 4.
